(19) Europäisches Patentamt
European Patent Office
Office européen des brevets

(11)  **EP 1 145 473 B1**

(12)  **FASCICULE DE BREVET EUROPEEN**

(45) Date de publication et mention
de la délivrance du brevet:
**17.04.2019  Bulletin 2019/16**

(51) Int Cl.:
***H04L 1/00*** *(2006.01)*

(21) Numéro de dépôt: **00901657.7**

(22) Date de dépôt: **27.01.2000**

(86) Numéro de dépôt international:
**PCT/FR2000/000189**

(87) Numéro de publication internationale:
**WO 2000/046947 (10.08.2000 Gazette 2000/32)**

(54) **PROCÉDÉ, SYSTÈME, DISPOSITIF DESTINÉS À PROUVER L'AUTHENTICITÉ D'UNE ENTITÉ ET/OU L'INTEGRITÉ ET/OU L'AUTHENTICITÉ D'UN MESSAGE AUX MOYENS DE FACTEURS PREMIERS PARTICULIERS**

VERFAHREN, SYSTEM UND EINRICHTUNG ZUM NACHWEIS DER AUTHENTIZITÄT EINER EINHEIT UND/ODER DER INTEGRITÄT UND/ODER AUTHENTIZITÄT EINER NACHRICHT MIT HILFE BESONDERER PRIMFAKTOREN

METHOD, SYSTEM, DEVICE FOR PROVING THE AUTHENTICITY OF AN ENTITY AND/OR THE INTEGRITY AND/OR THE AUTHENTICITY OF A MESSAGE USING SPECIFIC PRIME FACTORS

(84) Etats contractants désignés:
**AT BE CH CY DE DK ES FI FR GB GR IE IT LI LU MC NL PT SE**

(30) Priorité:  **27.01.1999  FR 9901065**
**23.03.1999  FR 9903770**
**01.10.1999  FR 9912465**
**01.10.1999  FR 9912467**
**01.10.1999  FR 9912468**

(43) Date de publication de la demande:
**17.10.2001  Bulletin 2001/42**

(73) Titulaire: **Callahan Cellular L.L.C.**
**Wilmington, DE 19808 (US)**

(72) Inventeurs:
• **GUILLOU, Louis**
**F-35230 Bourgbarre (FR)**
• **QUISQUATER, Jean-Jacques**
**B-1640 Rhode Saint Genese (BE)**

(74) Mandataire: **Small, Gary James**
**Carpmaels & Ransford LLP**
**One Southampton Row**
**London WC1B 5HA (GB)**

(56) Documents cités:
**EP-A- 0 311 470    EP-A- 0 381 523**

Remarques:
L'OMPI données de publication A3 ne sont pas actuellement disponibles.

**Description**

La présente invention concerne le domaine technique des procédés, des systèmes ainsi que des dispositifs destinés à prouver l'authenticité d'une entité et/ou l'intégrité et/ou l'authenticité d'un message.

Le brevet EP 0 311 470 B1 dont les inventeurs sont Louis Guillou et Jean-Jacques Quisquater décrit un tel procédé. On y fera ci-après référence en le désignant par les termes : "brevet GQ" ou "procédé GQ". Par la suite on désignera parfois par "GQ2", "invention GQ2" ou "technologie GQ2" de nouveaux développements de la technologie GQ faisant l'objet des demandes pendantes déposées le même jour que la présente demande par France Télécom, TDF et la Société Mathrizk et ayant pour inventeur Louis Guillou et Jean-Jacques Quisquater. Les traits caractéristiques de ces demandes pendantes sont rappelés chaque fois que cela est nécessaire dans la description qui suit.

Selon le procédé GQ, une entité appelée " autorité de confiance " attribue une identité à chaque entité appelée " témoin " et en calcule la signature RSA; durant un processus de personnalisation, l'autorité de confiance donne identité et signature au témoin. Par la suite, le témoin proclame : "*Voici mon identité ; j'en connais la signature RSA.* " Le témoin prouve sans la révéler qu'il connaît la signature RSA de son identité. Grâce à la clé publique de vérification RSA distribuée par l'autorité de confiance, une entité appelée " contrôleur " vérifie sans en prendre connaissance que la signature RSA correspond à l'identité proclamée. Les mécanismes utilisant le procédé GQ se déroulent " sans transfert de connaissance ". Selon le procédé GQ, le témoin ne connaît pas la clé privée RSA avec laquelle l'autorité de confiance signe un grand nombre d'identités.

La technologie GQ précédemment décrite fait appel à la technologie RSA.

Mais si la technologie RSA dépend bel et bien de la factorisation du module n, cette dépendance n'est pas une équivalence, loin s'en faut, comme le démontrent les attaques dites "multiplicatives" contre les diverses normes de signature numérique mettant en oeuvre la technologie RSA.

L'objectif de la technologie GQ2 est double : d'une part, améliorer les performances par rapport à la technologie RSA ; d'autre part, éviter les problèmes inhérents à la technologie RSA. La connaissance de la clé privée GQ2 est équivalente à la connaissance de la factorisation du module n. Toute attaque au niveau des triplets GQ2 se ramène à la factorisation du module n : il y a cette fois équivalence. Avec la technologie GQ2, la charge de travail est réduite, tant pour l'entité qui signe ou qui s'authentifie que pour celle qui contrôle. Grâce à un meilleur usage du problème de la factorisation, tant en sécurité qu'en performance, la technologie GQ2 évite les inconvénients présentés par la technologie RSA.

Le procédé GQ met en oeuvre des calculs modulo des nombres de 512 bits ou davantage. Ces calculs concernent des nombres ayant sensiblement la même taille élevés à des puissances de l'ordre de $2^{16} + 1$. Or les infrastructures microélectroniques existantes, notamment dans le domaine des cartes bancaires, font usage de microprocesseurs auto-programmables monolithiques dépourvus de coprocesseurs arithmétiques. La charge de travail liée aux multiples opérations arithmétiques impliquées par des procédés tels que le procédé GQ, entraîne des temps de calcul qui dans certains cas s'avèrent pénalisant pour les consommateurs utilisant des cartes bancaires pour acquitter leurs achats. Il est rappelé ici, qu'en cherchant à accroître la sécurité des cartes de paiement, les autorités bancaires posent un problème particulièrement délicat à résoudre. En effet, il faut traiter deux questions apparemment contradictoires : augmenter la sécurité en utilisant des clés de plus en plus longues et distinctes pour chaque carte tout en évitant que la charge de travail n'entraîne des temps de calcul prohibitifs pour les utilisateurs. Ce problème prend un relief particulier dans la mesure où, en outre, il convient de tenir compte de l'infrastructure en place et des composants microprocesseurs existants.

La technologie GQ2 apporte une solution à ce problème tout en renforçant la sécurité.

La technologie GQ2 met en oeuvre des facteurs premiers ayant des propriétés particulières. Différentes techniques existent pour produire ces facteurs premiers. La présente invention a pour objet un procédé permettant de produire de manière systématique de tels facteurs premiers. Elle concerne aussi l'application qui peut être faite de ceux-ci plus particulièrement dans la mise en oeuvre de la technologie GQ2. On souligne dès à présent que ces facteurs premiers particuliers et le procédé permettant de les obtenir sont susceptibles d'application en dehors du champ de la technologie GQ2.

L'invention s'applique à un procédé (procédé GQ2) destiné à prouver à une entité contrôleur,

- l'authenticité d'une entité et/ou
- l'intégrité d'un message **M** associé à cette entité.

Cette preuve est établie au moyen de tout ou partie des paramètres suivants ou dérivés de ceux-ci:

- un module public **n** constitué par le produit de **f** facteurs premiers $p_1, p_2, ... p_f$ (**f** étant supérieur ou égal à 2),
- un exposant public **v** ;
- **m** nombres de base $g_1, g_2, ... g_m$ entiers, distincts, (**m** étant supérieur ou égal à 1).

Les nombres de base $g_i$ sont tels que les deux équations (1) et (2) :

$$x^2 \equiv g_i \bmod n$$

et

$$x^2 \equiv -g_i \bmod n$$

n'ont pas de solution en x dans l'anneau des entiers modulo **n,**
et tel que l'équation (3):

$$x^v \equiv g_i^2 \bmod n$$

a des solutions en x dans l'anneau des entiers modulo **n** .

Le procédé selon l'invention permet de produire les **f** facteurs premiers $p_1,$ $p_2,$ ... $p_f$ de telle sorte que les équations (1), (2) et (3) soient satisfaites. Le procédé selon l'invention comprend l'étape de choisir en premier :

- les **m** nombres de base $g_1,$ $g_2,$ ... $g_m,$
- la taille du module **n,**
- la taille des **f** facteurs premiers $p_1,$ $p_2,$ ... $p_f.$

Le procédé concerne le cas où l'exposant public v est de la forme :
$v = 2^k$ où **k** est un paramètre de sécurité plus grand que 1. On choisit également en premier le paramètre de sécurité **k**. Cette valeur particulière de l'exposant **v** est un des traits essentiels de la technologie GQ2.

De préférence, les **m** nombres de base $g_1,$ $g_2,$ ... $g_m,$ sont choisis au moins en partie parmi les premiers nombres entiers. De préférence également, le paramètre de sécurité **k** est un petit nombre entier, notamment inférieur à 100. Avantageusement, la taille du module **n** est supérieure à plusieurs centaines de bits. Avantageusement également, les **f** facteurs premiers $p_1,$ $p_2,$ ... $p_f$ ont une taille voisine de la taille du module **n** divisé par le nombre **f** de facteurs.

Selon une caractéristique importante du procédé selon l'invention, les **f** facteurs premiers $p_1,$ $p_2,$ ... $p_f$ ne sont pas choisis de manière quelconque. Parmi les **f** facteurs premiers $p_1,$ $p_2,$ ... $p_f$ un certain nombre d'entre eux : **e** seront choisis congrus à 1 modulo 4. Ce nombre **e** de facteurs premiers peut être nul. Dans le cas où **e** est nul le module **n** sera ci-après qualifié de module basique, dans le cas où **e > 0** le module **n** sera ci-après qualifié de module mixte. Les **f-e** autres facteurs premiers sont choisis congrus à 3 modulo 4. Ce nombre **f-e** de facteurs premiers est au moins égal à 2.

**Choix des f-e facteurs premiers congrus à 3 modulo 4**

Pour produire les **f-e** facteurs premiers $p_1,$ $p_2,$ ... $p_{f-e}$ congrus à 3 modulo 4, on met en oeuvre les étapes suivantes :

- on choisit le premier facteur premier $p_1$ congru à 3 modulo 4 puis,
- on choisit le deuxième facteur premier $p_2$ tel que $p_2$ soit complémentaire de $p_1$ par rapport au nombre de base $g_1.$

Pour choisir le facteur $p_{i+1}$, on procède comme suit en distinguant deux cas:

(1) Cas où i> m

Dans le cas où i> m, on choisit le facteur $p_{i+1}$ congru à 3 modulo 4.

(2) Cas où i≤ m

Dans ce cas où i≤ m, on calcule le profil (**Profil$_i$($g_i$)**) de $g_i$ par rapport aux i premiers facteurs premiers $p_i,$

- si le **Profil$_i$($g_i$)** est plat, on choisit le facteur $p_{i+1}$ tel que $p_{i+1}$ soit complémentaire de $p_1$ par rapport à $g_i,$
- sinon, on choisit parmi les i-1 nombres de bases $g_1,$ $g_2,$ ... $g_{i-1}$ et toutes leurs combinaisons multiplicatives le nombre, ci-après dénommé **g**, tel que **Profil$_i$(g)** = **Profil$_i$($g_i$)**, on choisit ensuite $p_{i+1}$ tel que **Profil$_{i+1}$($g_i$)** ≠ **Proril$_{i+1}$(g)**.

Les expressions "complémentaire", "profil", "profil plat" ont le sens défini dans la description.
Pour choisir le dernier facteur premier $p_{f-e}$ on procède comme suit, en distinguant trois cas :

(1) Cas où f-e-1 > m

Dans le cas où f-e-1 > m, on choisit $p_{f-e}$ congru à 3 modulo 4.

(2) Cas où f-e-1 = m

Dans le cas où f-e-1 = m, on calcule $Profil_{f-e-1}(g_m)$ par rapport aux f-e-1 premiers facteurs premiers, de $p_1$ à $p_{f-e-1}$,

- si $Profil_{f-e-1}(g_m)$ est plat, on choisit $p_{f-e-1}$ tel qu'il soit complémentaire de $p_1$ par rapport à $g_m$,
- sinon, on procède comme il est ci-après stipulé.

On choisit parmi les **m-1** nombres de bases de $g_1$ à $g_{m-1}$ et toutes leurs combinaisons multiplicatives le nombre, ci-après dénommé **g**, tel que $Profil_i(g) = Profil_i(g_i)$ puis, on choisit ensuite $p_{f-e}$ tel que $Profil_{f-e}(g) \neq Profil_{f-e}(g_m)$.

(3) Cas où f-e-1 < m

Dans le cas où f-e-1 < m, on choisit $p_{f-e}$ tel que les deux conditions suivantes soient satisfaites :

(3.1) Première condition.

On calcule $Profil_{f-e-1}(g_{f-e-1})$ par rapport aux f-e-1 premiers facteurs premiers, de $p_1$ à $p_{f-e-1}$, Deux cas sont alors à considérer. Selon l'un ou l'autre de ces deux cas, la première condition sera différente.
Si $Profil_{f-e-1}(g_{f-e-1})$ est plat, on choisit $p_{f-e}$ tel qu'il satisfasse à la première condition d'être complémentaire de $p_1$ par rapport à $g_{f-e-1}$ (première condition selon le premier cas) sinon, on choisit parmi les **f-e-1** nombres de bases de $g_1$ à $g_{m-1}$ et toutes leurs combinaisons multiplicatives le nombre, ci-après dénommé **g**, tel que $Profil_i(g) = Profil_{f-e-1}(g_{f-e-1})$ puis, on choisit ensuite $p_{f-e}$ tel qu'il satisfasse à la condition d'être tel que $Profil_{f-e}(g) \neq Proril_{f-e}(g_m)$, (première condition selon le deuxième cas)

(3.2) Deuxième condition

On sélectionne parmi l'ensemble des derniers nombres de bases de $g_{f-e}$ à $g_m$ ceux dont le profil $Profil_{f-e-1}(g_i)$ est plat puis, on choisit $p_{f-e}$ tel qu'il satisfasse à la condition d'être complémentaire de $p_1$ par rapport à chacun des nombres de bases ainsi sélectionnés (deuxième condition).

**Choix des e facteurs premiers congrus à 1 modulo 4**

Pour produire les e facteurs premiers congrus à 1 modulo 4, on évalue chaque candidat facteur premier **p**, de $p_{f-e}$ à $p_f$, en lui faisant subir les deux tests successifs suivants.

(1) Premier test

On calcule le symbole de Legendre de chaque nombre de base $g_i$, de $g_1$ à $g_m$, par rapport au facteur premier **p** candidat,

- si le symbole de Legendre est égal à -1, on rejette le candidat **p**,
- si le symbole de Legendre est égal à +1, on poursuit l'évaluation du candidat **p** en passant au nombre de base suivant puis, lorsque le dernier nombre de base a été pris en compte on passe au deuxième test,

(2) Deuxième test,

On calcule un nombre entier **t** tel que p-1 est divisible par $2^t$ mais pas par $2^{t+1}$ puis, on calcule un entier s tel que $s = (p-1+2^t)/2^{t+1}$.
On applique la clé $\langle s, p \rangle$ à chaque valeur publique $G_i$ pour obtenir un résultat **r**

$$r \equiv G_i{}^s \bmod p$$

Si **r** est égal à **g$_i$** ou - **g$_i$**, on poursuit le deuxième test en passant à la valeur publique **G$_{i+1}$** suivante.

Si **r** est différent de **g$_i$** ou - **g$_i$**, on calcule un facteur **u** en appliquant l'algorithme ci-après spécifié pour un indice **ii** allant de 1 à t-2. L'algorithme met en oeuvre deux variables : **w** initialisée par **r** et **jj** = **2$^{ii}$** prenant des valeurs allant de 2 à 2$^{t-2}$, ainsi qu'un nombre **b** obtenu par l'application de la clé ⟨**(p-1)/2$^t$, p**⟩ à un résidu non quadratique de CG(p). L'algorithme consiste à répéter autant que nécessaire, la séquence suivante:

- Etape 1 : on calcule w$^2$/G$_i$ (mod p).
- Etape 2 : on élève le résultat à la puissance 2$^{t-ii-1}$. Deux cas sont à considérer.

Premier cas

Si on obtient +1 , on passe à la valeur publique **G$_{i+1}$** suivante et on poursuit le deuxième test pour cette valeur publique.

Deuxième cas.

Si on obtient -1, on calcule jj = 2$^{ii}$ puis, on remplace w par w.b$^{jj}$ (mod p). Ensuite, on poursuit l'algorithme pour la valeur suivante de l'indice ii.

A l'issue de l'algorithme, la valeur figurant dans la variable jj permet de calculer un nombre entier u par la relation jj = 2$^{t-u}$ puis, on calcule l'expression t-u. Deux cas se présentent :

- si t-u < k , on rejette le candidat **p**
- si t-u ≥ k, on continue l'évaluation du candidat **p** en passant à la valeur publique **G$_{i+1}$** suivante puis, en poursuivant le deuxième test.

Le candidat **p** est accepté comme facteur premier congru à 1 modulo 4 si à l'issue du deuxième test, pour toutes les **m** valeurs publiques **G$_i$**, il n'a pas été rejeté.

**Application aux valeurs publiques et privées de GQ2**

La présente invention concerne également un procédé (procédé GQ2) faisant application du procédé qui vient d'être décrit et qui permet, rappelons le, de produire **f** facteurs premiers **p$_1$, p$_2$,** ... **p$_f$** ayant des propriétés particulières. Le procédé faisant application du procédé qui vient d'être décrit est destiné à prouver à une entité contrôleur,

- l'authenticité d'une entité et/ou
- l'intégrité d'un message **M** associé à cette entité,

Cette preuve est établie au moyen de tout ou partie des paramètres suivants ou dérivés de ceux-ci:

- **m** couples de valeurs privées **Q$_1$, Q$_2$,** ... **Q$_m$** et publiques **G$_1$, G$_2$,** ... **G$_m$** (**m** étant supérieur ou égal à 1),
- le module public **n** constitué par le produit desdits **f** facteurs premiers **p$_1$, p$_2$,** ... **p$_f$** (**f** étant supérieur ou égal à 2),
- l'exposant public **v** .

Ledit module, ledit exposant et lesdites valeurs sont liés par des relations du type :

$$G_i \cdot Q_i{}^v \equiv 1 \cdot \bmod n$$

ou

$$G_i \equiv Q_i{}^v \bmod n \ .$$

Ledit exposant v est tel que
**v = 2$^k$** où **k** est un paramètre de sécurité plus grand que 1 .

Ladite valeur publique $G_i$ est le carré $g_i^2$ du nombre de base $g_i$ inférieur aux $f$ facteurs premiers $p_1, p_2, ... p_f$. Le nombre de base $g_i$ est tel que les deux équations :

$$x^2 \equiv g_i \bmod n$$

et

$$x^2 \equiv - g_i \bmod n$$

n'ont pas de solution en x dans l'anneau des entiers modulo $n$ et tel que l'équation :

$$x^v \equiv g_i^2 \bmod n$$

a des solutions en x dans l'anneau des entiers modulo $n$.

Ledit procédé met en oeuvre selon les étapes suivantes une entité appelée témoin. Ladite entité témoin dispose des $f$ facteurs premiers $p_i$ et/ou des paramètres des restes chinois des facteurs premiers et/ou du module public $n$ et/ou des $m$ valeurs privées $Q_i$ et/ou des $f.m$ composantes $Q_{i, j}$ ($Q_{i, j} \equiv Q_i \bmod p_j$) des valeurs privées $Q_i$ et de l'exposant public $v$ .

Le témoin calcule des engagements $R$ dans l'anneau des entiers modulo $n$ . Chaque engagement est calculé :

- soit en effectuant des opérations du type

$$R \equiv r^v \bmod n$$

où $r$ est un aléa tel que $0 < r < n$,
- soit en effectuant des opérations du type

$$R_i \equiv r_i^v \bmod p_i$$

où $r_i$ est un aléa associé au nombre premier $p_i$ tel que $0 < r_i < p_i$, chaque $r_i$ appartenant à une collection d'aléas $\{r_1 , r_2, ... r_f\}$, puis en appliquant la méthode des restes chinois.

Le témoin reçoit un ou plusieurs défis $d$. Chaque défi $d$ comportant $m$ entiers $d_i$ ci-après appelés défis élémentaires. Le témoin calcule à partir de chaque défi $d$ une réponse $D$,

- soit en effectuant des opérations du type :

$$D \equiv r . Q_1^{d1} . Q_2^{d2} . ... Q_m^{dm} \bmod n$$

- soit en effectuant des opérations du type :

$$D_i \equiv r_i . Q_{i,1}^{d1} . Q_{i,2}^{d2} . ... Q_{i,m}^{dm} \bmod p_i$$

puis, en appliquant la méthode des restes chinois.

Le procédé est tel qu'il y a autant de réponses $D$ que de défis $d$ que d'engagements $R$, chaque groupe de nombres $R, d, D$ constituant un triplet noté $\{R, d, D\}$.

De préférence, pour mettre en oeuvre, comme il vient d'être décrit, les couples de valeurs privées $Q_1, Q_2, ... Q_m$ et publiques $G_1, G_2, ... G_m$, on utilise les facteurs premiers $p_1, p_2, ... p_f$ et/ou les paramètres des restes chinois, les nombres de bases $g_1, g_2, ... g_m$ et/ou les valeurs publiques $G_1, G_2, ... G_m$ pour calculer :

- soit les valeurs privées $Q_1, Q_2, ... Q_m$ en extrayant une $k$ **ième** racine carrée modulo $n$ de $G_i$, ou en prenant l'inverse d'une **k ième** racine carrée modulo **n** de **G$_i$**,

- soit les **f.m** composantes privées **Q$_{i, j}$** des valeurs privées **Q$_1$, Q$_2$, ... Q$_m$**, telles que **Q$_{i, j}$ ≡ Q$_i$ (mod p$_j$)**,

Plus particulièrement, pour calculer les **f.m** composantes privées **Q$_{i, j}$** des valeurs privées **Q$_1$, Q$_2$, ... Q$_m$** :

- on applique la clé ⟨**s, p$_j$**⟩ pour calculer z tel que

$$\mathbf{z \equiv G_i^s \ (mod \ p_j)}$$

- et on utilise les valeurs **t** et **u**.

Les valeurs **t** et **u** sont calculées comme il a été indiqué ci-dessus dans le cas où **p$_j$** est congru à 1 modulo 4. Les valeurs **t** et **u** sont prises respectivement égales à 1 (t=1) et 0 (u=0) dans le cas où **p$_j$** est congru à 3 modulo 4.

Si la valeur **u** est nul, on considère l'ensemble des nombres zz tels que :

- • • zz soit égale à z ou tel que
- • • zz soit égale au produit (mod p$_j$) de z par chacune des 2$^{ii-t}$ racines 2$^{ii}$ ièmes primitives de l'unité, ii allant de 1 à min(k,t) .

Si **u** est positif, on considère l'ensemble des nombres zz tels que zz soit égale au produit (mod p$_j$) de za par chacune des 2$^k$ racines 2$^k$ ièmes de l'unité, za désignant la valeur de la variable w à l'issue de l'algorithme ci-dessus décrit.

On en déduit au moins une valeur de la composante **Q$_{i, j}$**. Elle est égale à zz lorsque l'équation **G$_i$ ≡ Q$_i^v$ mod n** est utilisée ou bien elle est égale à l'inverse de zz modulo p$_j$ de zz lorsque l'équation **G$_i$ . Q$_i^v$ ≡ 1 . mod n** est utilisée.

Description

Rappelons l'objectif de la technologie GQ: l'authentification dynamique d'entités et de messages associés, ainsi que la signature numérique de messages.

La version classique de la technologie GQ fait appel à la technologie RSA. Mais, si la technologie RSA dépend bel et bien de la factorisation, cette dépendance n'est pas une équivalence, loin s'en faut, comme le démontrent les attaques dites « multiplicatives » contre diverses normes de signature numérique mettant en oeuvre la technologie RSA.

Dans le cadre de la technologie GQ2, la présente partie de l'invention porte plus précisément sur la production des jeux de clés GQ2 destinés à assurer l'authentification dynamique et la signature numérique. La technologie GQ2 ne fait pas appel à la technologie RSA. L'objectif est double : d'une part, améliorer les performances par rapport à la technologie RSA ; d'autre part, éviter les problèmes inhérents à la technologie RSA. La clé privée GQ2 est la factorisation du module *n*. Toute attaque au niveau des triplets GQ2 se ramène à la factorisation du module *n* : il y a cette fois équivalence. Avec la technologie GQ2, la charge de travail est réduite, tant pour l'entité qui signe ou qui s'authentifie que pour celle qui contrôle. Grâce à un meilleur usage du problème de la factorisation, tant en sécurité qu'en performance, la technologie GQ2 concurrence la technologie RSA.

La technologie GQ2 utilise un ou plusieurs petits nombres entiers plus grands que 1, disons *m* petits nombres entiers (*m* ≥ 1) appelés « nombres de base » et notés par *g$_i$*. Puis, on choisit une clé publique de vérification ⟨*v, n*⟩ de la manière suivante. L'exposant public de vérification *v* est 2$^k$ où *k* est un petit nombre entier plus grand que 1 (*k* ≥ 2). Le module public *n* est le produit d'au moins deux facteurs premiers plus grands que les nombres de base, disons *f* facteurs premiers (*f* ≥ 2) notés par *p$_j$*, de *p$_1$* ... *p$_f$*. Les *f* facteurs premiers sont choisis de façon à ce que le module public *n* ait les propriétés suivantes par rapport à chacun des *m* nombres de base de *g$_1$* à *g$_m$*.

- D'une part, les équations (1) et (2) n'ont pas de solution en *x* dans l'anneau des entiers modulo *n,* c'est-à-dire que *g$_i$* et -*g$_i$* sont deux résidus non quadratiques (mod n).

$$x^2 \equiv g_i \ (mod \ n) \qquad (1)$$

$$x^2 \equiv -g_i \ (mod \ n) \qquad (2)$$

- D'autre part, l'équation (3) a des solutions en *x* dans l'anneau des entiers modulo *n.*

$$x^{2^k} \equiv g_i^2 \pmod{n} \qquad (3)$$

Par la suite, ces propriétés sont encore appelées les principes GQ2.

La clé publique de vérification $\langle v, n \rangle$ étant fixée selon les nombres de base de $g_1$ à $g_m$ avec $m \geq 1$, chaque nombre de base $g_i$ détermine un couple de valeurs GQ2 comprenant une valeur publique $G_i$ et une valeur privée $Q_i$ : soit $m$ couples notés de $G_1\,Q_1$ à $G_m\,Q_m$. La valeur publique $G_i$ est le carré du nombre de base $g_i$: soit $G_i = g_i^2$. La valeur privée $Q_i$ est une des solutions à l'équation (3) ou bien l'inverse (mod $n$) d'une telle solution.

De même que le module $n$ se décompose en $f$ facteurs premiers, l'anneau des entiers modulo $n$ se décompose en $f$ corps de Galois, de CG($p_1$) à CG($p_f$). Voici les projections des équations (1), (2) et (3) dans CG($p_j$).

$$x^2 \equiv g_i \pmod{p_j} \qquad (1.a)$$

$$x^2 \equiv -g_i \pmod{p_j} \qquad (2.a)$$

$$x^{2^k} \equiv g_i^2 \pmod{p_j} \qquad (3.a)$$

Chaque valeur privée $Q_i$ peut se représenter de manière unique par $f$ composantes privées, une par facteur premier : $Q_{i,j} \equiv Q_i \pmod{p_j}$. Chaque composante privée $Q_{i,j}$ est une solution à l'équation (3.a) ou bien l'inverse (mod $p_j$) d'une telle solution. Après que toutes les solutions possibles à chaque équation (3.a) aient été calculées, la technique des restes chinois permet d'établir toutes les valeurs possibles pour chaque valeur privée $Q_i$ à partir de $f$ composantes de $Q_{i,1}$ à $Q_{i,f}$: $Q_i$ = Restes Chinois $(Q_{i,1}, Q_{i,2}, \ldots Q_{i,j})$ de manière à obtenir toutes les solutions possibles à l'équation (3).

Voici la technique des restes chinois : soient deux nombres entiers positifs premiers entre eux $a$ et $b$ tels que $0 < a < b$, et deux composantes $X_a$ de 0 à $a$-1 et $X_b$ de 0 à $b$-1 ; il s'agit de déterminer $X$ = Restes Chinois $(X_a, X_b)$, c'est-à-dire, le nombre unique $X$ de 0 à $a.b$-1 tel que $X_a \equiv X \pmod{a}$ et $X_b \equiv X \pmod{b}$. Voici le paramètre des restes chinois : $\alpha \equiv \{b \pmod{a}\}^{-1} \pmod{a}$. Voici l'opération des restes chinois : $\varepsilon \equiv X_b \pmod{a}$ ; $\delta = X_a\text{-}\varepsilon$ ; si $\delta$ est négatif, remplacer $\delta$ par $\delta$+$a$ ; $\gamma \equiv \alpha \cdot \delta \pmod{a}$ ; $X = \gamma \cdot b + X_b$.

Lorsque les facteurs premiers sont rangés dans l'ordre croissant, du plus petit $p_1$ au plus grand $p_f$, les paramètres des restes chinois peuvent être les suivants (il y en a $f$-1, c'est-à-dire, un de moins que de facteurs premiers). Le premier paramètre des restes chinois est $\alpha \equiv \{p_2 \pmod{p_1}\}^{-1} \pmod{p_1}$. Le second paramètre des restes chinois est $\beta \equiv \{p_1.p_2 \pmod{p_3}\}^{-1} \pmod{p_3}$. Le $i$ ième paramètre des restes chinois est $\lambda \equiv \{p_1.p_2. \ldots p_{i\_1} \pmod{p_i}\}^{-1} \pmod{p_i}$. Et ainsi de suite. Ensuite, en $f$-1 opérations des restes chinois, on établit un premier résultat (mod $p_2$ fois $p_1$) avec le premier paramètre, puis, un second résultat (mod $p_1.p_2$ fois $p_3$) avec le second paramètre, et ainsi de suite, jusqu'à un résultat (mod $p_1. \ldots p_{f\_1}$ fois $p_f$), c'est-à-dire, (mod $n$).

L'objet de l'invention est une méthode pour produire au hasard n'importe quel jeu de clés GQ2 parmi tous les jeux possibles, à savoir :

- produire au hasard n'importe quel module parmi tous les modules GQ2 possibles, c'est-à-dire, les modules assurant que, pour chacun des $m$ nombres de base $g_i$, les équations (1) et (2) n'ont pas de solution en $x$ dans l'anneau des entiers modulo $n$ alors que l'équation (3) en a.
- calculer toutes les solutions possibles à chacune des équations (3.a). La technique des restes chinois permet ensuite d'obtenir une valeur privée $Q_i$ à partir de chaque jeu de $f$ composantes de $Q_{i,1}$ à $Q_{i,f}$ de manière à obtenir n'importe quelle solution en $x$ à l'équation (3) parmi toutes les solutions possibles.
  $Q_i$ = Restes Chinois $(Q_{i,1}, Q_{i,2}, \ldots Q_{i,f})$

Pour appréhender le problème, puis, comprendre la solution que nous donnons au problème, c'est-à-dire, l'invention, nous analysons tout d'abord l'applicabilité des principes de la technologie GQ2. Commençons par rappeler la notion de rang dans un corps de Galois CG($p$) afin d'étudier les fonctions « élever au carré dans CG($p$) » et « prendre une racine carrée d'un résidu quadratique dans CG($p$) ». Puis, analysons l'existence et le nombre de solutions en $x$ dans CG($p$) aux équations (1.a), (2.a) et (3.a).

**Rang des éléments dans CG(*p*)**

Soit un nombre premier impair *p* et un nombre entier positif *a* plus petit que *p*. Définissons la suite {*X*}.

$$\left\{ X \right\} \equiv \left\{ x_1 = a; \ \text{puis, pour } i \geq 1, \ x_{i+1} \equiv a.x_i \ (\text{mod } p) \right\}$$

Calculons le terme pour l'indice *i+p* et utilisons le théorème de Fermat.

$$x_{i+p} \equiv a^p x_i \equiv a.x_i \equiv x_{i+1} \ (\text{mod } p)$$

Par conséquent, la période de la suite {*X*} est *p*-1 ou un diviseur de *p*-1. Cette période dépend de la valeur de *a*. Par définition, cette période est appelée « le rang de *a* (mod *p*) ». C'est l'indice d'apparition de l'unité dans la suite {*X*}.

$$x_{rang(a, p)} \equiv 1 \ (\text{mod } p)$$

Par exemple, lorsque (*p*-1)/2 est un nombre premier impair *p'*, le corps de Galois CG(*p*) comporte un seul élément de rang 1 : c'est 1, un seul élément de rang 2 : c'est -1, *p'*-1 éléments de rang *p'*, *p'*-1 éléments de rang 2.*p'*, c'est-à-dire, de rang *p*-1.

Les éléments de CG(*p*) ayant pour rang *p*-1 sont appelés les éléments « primitifs » ou encore, « générateurs » de CG(*p*). La dénomination est due au fait que leurs puissances successives dans CG(*p*), c'est-à-dire, les termes de la suite {*X*} pour les indices allant de 1 à *p*-1, forment une permutation de tous les éléments non nuls de CG(*p*).

Soit un élément primitif *y* de CG(*p*). Evaluons le rang de l'élément *y^i* (mod *p*) en fonction de *i* et de *p*-1. Lorsque *i* est premier avec *p*-1, c'est *p*-1. Lorsque *i* divise *p*-1, c'est (*p*-1)/*i*. Dans tous les cas, c'est (*p*-1)/pgcd(*p*-1, *i*).

La fonction d'Euler est notée par φ. Par définition, *n* étant un nombre entier positif, φ(*n*) est le nombre de nombres entiers positifs, plus petits que *n* et premiers avec *n*. Dans le corps CG(*p*), il y a donc φ(*p*-1) éléments primitifs.

A titre d'illustration, voici la base de la technologie RSA. Le module public *n* est le produit de *f* facteurs premiers, de $p_1$ à $p_f$ avec *f* ≥ 2, tel que pour chaque facteur premier $p_j$, l'exposant public v est premier avec $p_j$-1. La clé ⟨*v*, $p_j$⟩ respecte le rang des éléments de CG($p_j$) : elle les permute. La permutation inverse s'obtient par une clé ⟨$s_j$, $p_j$⟩ telle que $p_j$-1 divise *v*.$s_j$-1.

**Carrés et racines carrées dans CG(*p*)**

Les éléments x et *p-x* ont le même carré dans CG(*p*). La clé ⟨2, *p*⟩ ne permute pas les éléments de CG(*p*) parce que *p*-1 est pair. Pour chaque nombre premier *p*, définissons un nombre entier *t* de la manière suivante : *p*-1 est divisible par $2^t$, mais pas par $2^{t+1}$, c'est-à-dire que *p* est congru à $2^t$+1 (mod $2^{t+1}$). Par exemple, *t* = 1 lorsque *p* est congru à 3 (mod 4) ; *t* = 2 lorsque *p* est congru à 5 (mod 8) ; *t* = 3 lorsque *p* est congru à 9 (mod 16) ; *t* = 4 lorsque *p* est congru à 17 (mod 32) ; et ainsi de suite. Chaque nombre premier impair figure dans une et une seule catégorie : *p* figure dans la *t* ième catégorie. En pratique, si l'on considère un assez grand nombre de nombres premiers successifs, environ un sur deux figure dans la première catégorie, un sur quatre dans la deuxième, un sur huit dans la troisième, un sur seize dans la quatrième, et ainsi de suite ; en résumé, un sur $2^t$ en moyenne figure dans la *t* ième catégorie.

Considérons le comportement de la fonction « élever au carré dans CG(p) » selon la parité du rang de l'argument.

- Il y a un seul élément fixe : c'est 1. Le carré de tout autre élément de rang <u>impair</u> est <u>un autre élément ayant le même rang</u>. Par conséquent, la clé ⟨2, *p*⟩ permute l'ensemble des (*p*-1)/$2^t$ éléments de rang impair. Le nombre de cycles de permutation dépend de la factorisation de (*p*-1)/$2^t$. Par exemple, lorsque (*p*-1)/$2^t$ est un nombre premier *p'*, il y a un grand cycle de permutation comportant *p'*-1 éléments.

- Le carré de tout élément de rang <u>pair</u> est <u>un autre élément dont le rang est divisé par deux</u>. Par conséquent, les éléments de rang pair se répartissent sur (*p*-1)/$2^t$ branches ; chaque élément non nul de rang impair porte une branche de longueur *t* comportant $2^t$-1 éléments, à savoir : un élément de rang divisible par deux mais pas par quatre, puis, si *t* ≥ 2, deux éléments de rang divisible par quatre mais pas par huit, puis, si *t* ≥ 3, quatre éléments de rang divisible par huit mais pas par seize, puis, si *t* ≥ 4, huit éléments de rang divisible par seize mais pas par 32, et ainsi de suite. Les $2^{t-1}$ extrémités de chaque branche sont des résidus non quadratiques ; leur rang est divisible par $2^t$.

Les figures 1A à 1D illustrent la fonction « élever au carré dans CG(*p*) » par un graphe orienté où chacun des

$p$-1 éléments non nuls du corps trouve sa place : les résidus non quadratiques sont en blanc et les résidus quadratiques en noir ; parmi les résidus quadratiques, les éléments de rang impair sont encerclés.

Ces figures présentent respectivement :

- figure 1A : cas où $p$ est congru à 3 (mod 4) ;
- figure 1B : cas où $p$ est congru à 5 (mod 8) ;
- figure 1 C : cas où $p$ est congru à 9 (mod 16) ;
- figure 1D : cas où $p$ est congru à 17 (mod 32).

Voyons comment calculer une solution en $x$ à l'équation $x^2 \equiv a$ (mod $p$) sachant que $a$ est un résidu quadratique de CG($p$), c'est-à-dire, comment « prendre une racine carrée dans CG($p$) ». Il y a bien sûr plusieurs façons d'obtenir le même résultat : le lecteur pourra avantageusement consulter les pages 31 à 36 du livre de Henri Cohen, *a Course in Computational Algebraic Number Theory,* publié en 1993 par Springer à Berlin comme le volume 138 de la série *Graduate Texts in Mathematics* (GTM 138).

Calculons un nombre entier $s = (p\text{-}1+2^t)/2^{t+1}$ pour établir une clé $\langle s, p \rangle$. Soit : $\langle (p+1)/4, p \rangle$ lorsque $p$ est congru à 3 (mod 4), $\langle (p+3)/8, p \rangle$ lorsque $p$ est congru à 5 (mod 8), $\langle (p+7)/16, p \rangle$ lorsque $p$ est congru à 9 (mod 16), $\langle (p+15)/32, p \rangle$ lorsque $p$ est congru à 17 (mod 32), et ainsi de suite.

- La clé $\langle s, p \rangle$ donne la racine carrée de rang impair de n'importe quel élément de rang impair. En effet, dans $CG(p)$, $r^2/a$ vaut $a$ élevé à la puissance $(2.(p\text{-}1+2^t)/2^{t+1})\text{-}1 = (p\text{-}1)/2^t$. Par conséquent, lorsque $a$ est sur un cycle, la clé $\langle s, p \rangle$ transforme $a$ en une solution que nous nommons w. L'autre solution est $p$-w.
- D'une manière générale, la clé $\langle s, p \rangle$ transforme tout résidu quadratique $a$ en une première approximation de solution que nous nommons $r$. Voici deux points clés, puis, l'ébauche d'une méthode pour améliorer pas à pas l'approximation jusqu'à une racine carrée de $a$.

- D'une part, puisque $a$ est un résidu quadratique, la clé $\langle 2^{t-1}, p \rangle$ transforme certainement $r^2/a$ en 1.
- D'autre part, supposons que nous connaissons un résidu non quadratique de CG($p$) que nous nommons $y$ ; la clé $\langle (p\text{-}1)/2^t, p \rangle$ transforme $y$ en un élément que nous nommons $b$ : c'est une racine $2^{t-1}$ ième de -1 ; en effet, $y^{(p-1)/2} \equiv -1$ (mod $p$). Par conséquent, dans $CG(p)$, le groupe multiplicatif des $2^t$ racines $2^t$ ièmes de l'unité est isomorphe au groupe multiplicatif des puissances de $b$ pour les exposants de 1 à $2^t$.
- Pour se rapprocher d'une racine carrée de $a$, élevons $r^2/a$ à la puissance $2^{t-2}$ (mod $p$): le résultat est +1 ou -1. La nouvelle approximation reste $r$ si le résultat est +1 ou bien devient $b.r$ (mod $p$) si le résultat est -1. Par conséquent, la clé $\langle 2^{t-2}, p \rangle$ transforme certainement la nouvelle approximation en 1. On peut continuer à se rapprocher : au prochain pas, on ajustera s'il le faut en multipliant par $b^2$ (mod $p$) ; et ainsi de suite.

L'algorithme suivant établit des approximations successives pour aboutir à une racine carrée de $a$ à partir des nombres entiers $r$ et $b$ définis ci-dessus ; il utilise deux variables entières : $w$ initialisée par $r$ pour représenter les approximations successives et $jj$ prenant des valeurs parmi les puissances de 2, de 2 à $2^{t-2}$.

Pour $i$ allant de 1 à $t$-2, répéter la séquence suivante :

- Calculer $w^2/a$ (mod $p$), puis, élever le résultat à la puissance $2^{t-i-1}$ (mod $p$) : on doit obtenir +1 ou -1. Lorsque l'on obtient -1, calculer $jj = 2^i$, puis, remplacer w par $w.b^{jj}$ (mod $p$). Lorsque l'on obtient +1, ne rien faire.

A l'issue du calcul, $w$ et $p$-w sont les deux racines carrées de $a$ dans CG($p$). En outre, nous apprenons que le rang de $a$ dans CG($p$) est divisible par $2^t/jj$ mais pas par $2^{t+1}/jj$. La pertinence de cette remarque apparaîtra par la suite.

## Analyse des principes de la technologie GQ2 dans CG($p$)

Soit deux nombres entiers $g$ et $k$ plus grands que 1 et un nombre premier $p$ plus grand que $g$. Analysons l'existence et le nombre de solutions en $x$ dans CG($p$) aux équations (1.a), (2.a) et (3.a).

Dans le corps de Galois CG($p$), distinguons différents cas selon la valeur de $t$, c'est-à-dire, selon la puissance de deux qui divise $p$-1. Rappelons que $p$-1 est divisible par $2^t$, mais pas par $2^{t+1}$, c'est-à-dire que $p$ est congru à $2^t+1$ (mod $2^{t+1}$). L'analyse précédente nous donne une idée assez précise du problème posé ainsi qu'une ébauche de solution.

**Lorsque $t$ = 1,** $p$ est congru à 3 (mod 4). Les symboles de Legendre de g et -g par rapport à $p$ sont différents ; tout résidu quadratique de CG($p$) a deux racines carrées dans CG($p$) : l'une est un résidu quadratique et l'autre un résidu non quadratique. D'une part, une des deux équations (1.a) ou (2.a) a deux solutions en x dans CG($p$) et l'autre n'en a pas. D'autre part, l'équation (3.a) a deux solutions en x dans CG($p$) quelle que soit la valeur de $k$.

**Lorsque $t$ = 2,** $p$ est congru à 5 (mod 8). Deux cas se présentent selon le symbole de Legendre de $g$ par rapport à $p$. Lorsque le symbole vaut -1, $g$ et $-g$ sont deux résidus non quadratiques de CG($p$) : les trois équations (1.a), (2.a) et (3.a) n'ont pas de solution en $x$ dans CG($p$). Lorsque le symbole vaut +1, g et -g sont deux résidus quadratiques de CG($p$), chaque équation (1.a) et (2.a) a deux solutions en $x$ dans CG($p$) ; de plus, le rang de $g^2$ dans CG($p$) est impair, ce qui implique que quelle que soit la valeur de $k$, l'équation (3.a) a quatre solutions en x dans CG($p$) dont une seule de rang impair.

La figure 2 illustre les solutions à l'équation (3.a) avec $k = 6$ et $p$ congru à 5 (mod 8), soit $t = 2$. Remarquons que, parce que le symbole de Legendre de 2 par rapport à $p$ congru à 5 (mod 8) vaut -1, $2^{(p-1)/4}$ (mod $p$) est alors une racine carrée de -1. On a donc :

$$p \equiv 5 \ (\text{mod } 8) \ ; \ \text{par conséquent} : (2|p) = -1$$

$$p \equiv 2^{\frac{p-1}{4}} \ (\text{mod } p) ; \text{donc } b^2 \equiv -1 \ (\text{mod } p)$$

**Lorsque $t = 3$,** $p$ est congru à 9 (mod 16). Considérons le symbole de Legendre de g par rapport à $p$. Lorsque le symbole vaut -1, $g$ et $-g$ sont deux résidus non quadratiques de CG($p$) : les trois équations (1.a), (2.a) et (3.a) n'ont pas de solution en $x$ dans CG($p$). Lorsque le symbole vaut +1, $g$ et $-g$ sont deux résidus quadratiques de CG($p$) ; chaque équation (1.a) et (2.a) a deux solutions en $x$ dans CG($p$) ; l'existence de solutions en x à l'équation (3.a) dépend du rang de $g^2$ dans CG($p$) : ce rang est impair ou divisible par deux, mais pas par quatre. Lorsque le rang de $g^2$ dans CG($p$) est divisible par deux, mais pas par quatre, l'équation (3.a) a quatre solutions en $x$ dans CG($p$) pour $k = 2$ ; elle n'en a pas pour $k \geq 3$. Lorsque le rang de $g^2$ dans CG($p$) est impair, l'équation (3.a) a quatre solutions en $x$ dans CG($p$) pour $k = 2$ et huit pour $k \geq 3$ ; dans les deux cas, une seule est de rang impair.

**Lorsque $t = 4$,** $p$ est congru à 17 (mod 32). Considérons le symbole de Legendre de g par rapport à $p$. Lorsque le symbole vaut -1, $g$ et $-g$ sont deux résidus non quadratiques de CG($p$) : les trois équations (1.a), (2.a) et (3.a) n'ont pas de solution en $x$ dans CG($p$). Lorsque le symbole vaut +1, $g$ et $-g$ sont deux résidus quadratiques de $CG(p)$ ; chaque équation (1.a) et (2.a) a deux solutions en $x$ dans CG($p$) ; l'existence de solutions en $x$ à l'équation (3.a) dépend du rang de $g^2$ dans CG($p$) : ce rang est impair ou divisible par deux ou quatre, mais pas par huit. Lorsque le rang de $g^2$ dans CG($p$) est divisible par quatre, mais pas par huit, l'équation (3.a) a quatre solutions en $x$ dans CG($p$) pour $k = 2$ ; elle n'en a pas pour $k \geq 3$. Lorsque le rang de $g^2$ dans CG($p$) est divisible par deux, mais pas par quatre, l'équation (3.a) a quatre solutions en $x$ dans CG($p$) pour $k = 2$ ou huit pour $k = 3$ ; elle n'en a pas pour $k \geq 4$. Lorsque le rang de $g^2$ dans CG($p$) est impair, l'équation (3.a) a quatre solutions en $x$ dans CG($p$) pour $k = 2$, huit pour $k = 3$ et seize pour $k \geq 4$ ; dans les trois cas, une seule est de rang impair.

**Et ainsi de suite,** de sorte que le cas où $p$ est congru à 1 (mod 4) peut se résumer comme suit.

**Lorsque $p$ est congru à 1 (mod 4),** considérons le symbole de Legendre de g par rapport à $p$. Lorsque le symbole vaut -1, $g$ et $-g$ sont deux résidus non quadratiques de CG($p$) : les trois équations (1.a), (2.a) et (3.a) n'ont pas de solution en $x$ dans CG($p$). Lorsque le symbole vaut +1, $g$ et $-g$ sont deux résidus quadratiques de CG($p$) ; chaque équation (1.a) et (2.a) a deux solutions en $x$ dans CG($p$). Définissons le nombre entier $u$ : le rang de $g^2$ dans CG($p$) est divisible par $2^u$, mais pas par $2^{u+1}$ ; la valeur de $u$ figure parmi les $t$-1 valeurs possibles, de 0 à $t$-2. L'existence et le nombre de solutions en $x$ dans CG($p$) à l'équation (3.a) dépend des valeurs de $k$, $t$ et $u$. Lorsque $u$ est positif et $k$ est supérieur à $t$-$u$, l'équation (3.a) n'a pas de solution en $x$ dans CG($p$). Lorsque $u$ est nul et $k$ supérieur à $t$, l'équation (3.a) a $2^t$ solutions en x dans CG($p$). Lorsque $k$ inférieur ou égal à $t$-$u$, l'équation (3.a) a $2^k$ solutions en $x$ dans CG($p$).

## Applicabilité des principes GQ2 dans les anneaux d'entiers modulo

Pour que l'équation (1), respectivement (2), n'ait pas de solution en x dans l'anneau des entiers modulo $n$, il faut et il suffit que, <u>pour au moins un des facteurs premiers $p$,</u> de $p_1$ à $p_f$, l'équation (1.a), respectivement (2.a), n'ait pas de solution en x dans CG(p).

Pour que l'équation (3) ait des solutions en x dans l'anneau des entiers modulo $n$, il faut et il suffit que, pour <u>chacun des facteurs premiers $p$,</u> de $p_1$ à $p_f$, l'équation (3.a) ait des solutions en $x$ dans CG(p).

L'équation (3) interdit tout facteur premier $p$ congru à 1 (mod 4) dès que pour l'un des nombres de base $g$, de $g_1$ à $g_m$ : ou bien, le symbole de Legendre de $g$ par rapport à $p$ est égal à -1 ; ou bien, le symbole de Legendre de $g$ par rapport à $p$ est égal à +1 avec la condition : $u$ positif et supérieur à $t$-$k$. Pour qu'un facteur premier $p$ congru à 1 (mod 4) soit possible, il doit remplir l'une des deux conditions suivantes pour chacun des nombres de base $g$, de $g_1$ à $g_m$, selon les deux nombres entiers $t$ et $u$ définis ci-dessus. Ou bien, le rang de $G = g^2$ est impair dans CG($p$), c'est-à-dire, $u = 0$, quelle que soit la valeur de $k$. Ou bien, le rang de $G = g^2$ est pair dans CG($p$), c'est-à-dire, $u > 0$, et il satisfait la condition : $u + k \leq t$.

Un produit de facteurs premiers congrus à 1 (mod 4) ne peut assurer l'ensemble des principes de la technologie GQ2. Chaque module GQ2 doit avoir au moins deux facteurs premiers congrus à 3 (mod 4) tels que, pour chaque nombre de base g, le symbole de Legendre de g par rapport à l'un diffère du symbole de Legendre de g par rapport à l'autre. Lorsque tous les facteurs premiers sont congrus à 3 (mod 4), on dira que le **module GQ2** est **basique.** Lorsqu'en plus d'au moins deux facteurs premiers congrus à 3 (mod 4), le module inclut un ou plusieurs facteurs premiers congrus à 1 (mod 4), on dira que le **module GQ2** est **mixte.**

**Construction systématique de modules GQ2**

Au départ, il faut fixer les contraintes globales à imposer au module n : une taille en bits (par exemple, 512 ou 1024 bits) ainsi qu'un nombre de bits successifs à 1 en poids forts (au moins un bien sûr, typiquement 16 ou 32 bits), un nombre $f$ de facteurs premiers et un nombre $e$ (pouvant être nul) de facteurs premiers devant être congrus à 1 (mod 4) ; les autres facteurs premiers, soit $f$-$e$ facteurs, au moins deux, doivent être congrus à 3 (mod 4). Le module $n$ sera le produit de $f$ facteurs premiers de tailles voisines. Lorsque $e = 0$, on obtient un module GQ2 basique; lorsque $e > 0$, on obtient un module GQ2 mixte. Un module basique est le produit de facteurs premiers tous congrus à 3 (mod 4). Un module GQ2 mixte apparaît donc comme le produit d'un module GQ2 basique par un ou plusieurs autres facteurs premiers congrus à 1 (mod 4). On produit d'abord des facteurs premiers congrus à 3 (mod 4). Ensuite, si $e > 0$, on produit des facteurs premiers congrus à 1 (mod 4).

Pour l'efficacité de la construction de modules GQ2, il vaut bien mieux sélectionner chaque candidat avant de chercher à savoir s'il est premier.

Notés par $g_1$ $g_2$ ..., les nombres de base figurent typiquement parmi les premiers nombres premiers : 2, 3, 5, 7, **...** Faute d'indication contraire, les $m$ nombres de base sont les $m$ premiers nombres premiers : $g_1 = 2$, $g_2 = 3$, $g_3 = 5$, $g_4 = 7$, ... Toutefois, notons les remarques suivantes : il faut éviter 2 si l'on escompte un facteur congru à 5 (mod 8) ; il faut éviter 3 si l'on doit utiliser la clé publique $\langle 3, n \rangle$ comme clé publique de vérification RSA.

**Choix de $f$-$e$ facteurs premiers congrus à 3 (mod 4)**

A partir du deuxième facteur, le programme demande et utilise un nombre de base par facteur. Pour le choix du dernier facteur congru à 3 (mod 4), le programme demande s'il y a d'autres nombres de base, c'est-à-dire, si $m$ est égal ou supérieur à $f$-$e$, puis, si tel est le cas, demande et prend en compte les derniers nombres de base, de $g_{f-e}$ à $g_m$. Pour formaliser le choix des facteurs premiers congrus à 3 (mod 4), nous avons introduit une notion de **u** ; le profil caractérise un nombre entier g par rapport à un ensemble de facteurs premiers plus grands que g et congrus à 3 (mod 4).

- Lorsqu'un nombre entier $g$ a le même symbole de Legendre par rapport à deux facteurs premiers, on dit que les facteurs premiers sont **équivalents** par rapport à $g$. Sinon, ils sont **complémentaires** par rapport à $g$.
- Noté par Profil$_f(g)$, le **profil** d'un nombre entier g par rapport à $f$ facteurs premiers $p_1$ $p_2$ ... $p_f$ est une séquence de $f$ bits, un bit par facteur premier.

Le premier bit vaut 1 ; chaque bit suivant vaut 1 ou 0 selon que le facteur suivant est équivalent ou complémentaire de $p_1$ par rapport à $g$.

- Lorsque tous les bits d'un profil sont égaux à 1, on dit que le profil est **plat.** Dans un tel cas, tous les symboles de Legendre de $g$ sont égaux à +1, ou bien, à -1. Lorsque le profil de $g$ est non plat, les équations (1) et (2) n'ont pas de solution en $x$ dans l'anneau des entiers modulo $n$.
- Par définition, le profil de $g$ par rapport à un seul nombre premier congru à 3 (mod 4) est toujours plat. Cette extension permet de généraliser l'algorithme de choix des facteurs premiers congrus à 3 (mod 4).

Lorsque les profils de deux nombres de base $g_1$ et $g_2$ sont différents, ce qui implique au moins trois facteurs premiers congrus à 3 (mod 4), la connaissance des deux valeurs privées $Q_1$ et $Q_2$ induit la connaissance de deux décompositions différentes du module $n$. Lorsque les nombres de base sont des petits nombres premiers, le programme assure que les profils des $2^{f-e-1}$-1 combinaisons multiplicatives des $f$-$e$-1 premiers nombres de base sont tous différents : ils prennent toutes les valeurs possibles. La notion de profil ne s'étend pas aux facteurs premiers congrus à 1 (mod 4).

**Premier facteur premier $p_1$ congru à 3 (mod 4)** : Chaque candidat doit être congru à 3 (mod 4), sans autre contrainte particulière.

**Deuxième facteur premier $p_2$ congru à 3 (mod 4)** avec prise en compte du premier nombre de base $g_1$ : Chaque candidat doit être complémentaire de $p_1$ par rapport à $g_1$.

**Troisième facteur premier $p_3$ congru à 3 (mod 4)** avec prise en compte du deuxième nombre de base $g_2$ : Selon le profil de $g_2$ par rapport aux deux premiers facteurs premiers $p_1$ et $p_2$, deux cas se présentent. Lorsque Profil$_2(g_2)$ est plat, chaque candidat doit être complémentaire de $p_1$ par rapport à $g_2$. Sinon, on a Profil$_2(g_1)$ = Profil$_2(g_2)$ ; chaque candidat doit alors assurer que Profil$_3(g_1)$ ≠ Profil$_3(g_2)$.

**Choix du _i_ ième facteur premier $p_{i+1}$ congru à 3 (mod 4)** avec prise en compte du nombre de base $g_i$ : Selon le profil de $g_i$ par rapport aux _i_ premiers facteurs premiers $p_1$, $p_2$, ... $p_i$, deux cas se présentent. Lorsque Profil$_i(g_i)$ est plat, chaque candidat doit être complémentaire de $p_1$ par rapport à $g_i$. Sinon, parmi les _i_-1 nombres de base $g_1$, $g_2$, ... $g_{i-1}$ et toutes leurs combinaisons multiplicatives, $g_1.g_2$, ..., $g_1.g_2$. ... $g_{i-1}$, soit en tout $2^{i-1}$-1 nombres entiers, il existe un nombre entier g et un seul tel que Profil$_i(g_i)$ = Profil$_i(g)$ ; chaque candidat doit alors assurer que Profil$_{i+1}(g_i)$ ≠ Profil$_{i+1}(g)$. **Dernier facteur premier $p_{f-e}$ congru à 3 (mod 4)** avec prise en compte du nombre de base $g_{f-e-1}$ et des autres nombres de base de $g_{f-e}$ à $g_m$ : On prend en compte les contraintes dues au nombre de base $g_{f-e-1}$, tout comme ci-dessus. En outre, lorsque _m_ est égal ou supérieur à _f-e,_ chaque candidat doit assurer un profil non plat aux derniers nombres de base, de $g_{f-e}$ à $g_m$, par rapport aux _f-e_ facteurs premiers. Chaque candidat doit être complémentaire de $p_1$ par rapport à tous les $g_i$ pour lesquels Profil$_{f-e-1}(g_i)$ est plat.

**En résumé, les facteurs premiers congrus à 3 (mod 4) sont choisis les uns en fonction des autres.**

Pour _i_ allant de 0 à _f-e_-1, pour choisir le _i_+1 ième facteur premier congru à 3 (mod 4), le candidat $p_{i+1}$ doit passer avec succès l'examen suivant :

✔ Si _i_ > _m_ ou si _i_ = 0, alors le candidat $p_{i+1}$ n'a pas d'autre contrainte ; il est donc accepté.
✔ Si 0 < _i_ ≤ _m,_ alors le candidat $p_{i+1}$ doit prendre en compte le _i_ ième nombre de base $g_i$. On calcule le profil Profil$_i(g_i)$ du nombre de base $g_i$ par rapport aux _i_ premiers facteurs premiers, de $p_1$ à $p_i$. Selon le résultat, un et un seul des deux cas suivants se présente :

- Si le profil est plat, alors le candidat $p_{i+1}$ doit être complémentaire de $p_1$ par rapport à $g_i$ ; sinon, il faut le rejeter.
- Sinon, parmi les _i_-1 nombres de base et toutes leurs combinaisons multiplicatives, il y a un et un seul nombre que nous nommons g tel que Profil$_i(g)$ = Profil$_i(g_i)$ ; alors le candidat $p_{i+1}$ doit être tel que Profil$_{i+1}(g)$ ≠ Profil$_{i+1}(g_i)$ ; sinon, il faut le rejeter.

✔ Si _i_+1 = _f-e_ et _i_ < _m_, c'est-à-dire, pour choisir le dernier facteur premier congru à 3 (mod 4) lorsqu'il reste des nombres de base, de $g_{f-e}$ à $g_m$, qui n'ont pas encore été pris en compte, le candidat $p_{f-e}$ doit les prendre en compte : parmi ces derniers nombres de base, on sélectionne ceux dont le profil Profil$_{f-e-1}(g_i)$ est plat ; le candidat $p_{f-e}$ doit être complémentaire de $p_1$ par rapport à chacun des nombres de base ainsi sélectionnés ; sinon, il faut le rejeter.

Le candidat est accepté lorsqu'il a passé avec succès les tests appropriés.

**Choix de e facteurs premiers congrus à 1 (mod 4)**

Pour être acceptable, chaque candidat _p_ congru à 1 (mod 4) doit remplir les conditions suivantes par rapport à chaque nombre de base de $g_1$ à $g_m$.

- Evaluons le symbole de Legendre de chaque nombre de base $g_i$ par rapport à _p_. Si le symbole vaut -1, rejetons le candidat _p_ pour passer à un autre candidat. Si le symbole vaut +1, poursuivons l'évaluation du candidat. Notons que si le nombre entier 2 est utilisé comme nombre de base, alors tous les candidats congrus à 5 (mod 8) doivent être écartés : le nombre de base 2 est incompatible avec un facteur congru à 5 (mod 8).
- Calculons un nombre entier $s = (p-1+2^t)/2^{t+1}$ pour établir une clé $\langle s, p \rangle$. Appliquons la clé $\langle s, p \rangle$ à chaque valeur publique $G_i$ pour obtenir un résultat _r_. Deux cas se présentent.

    - Si _r_ vaut $g_i$ ou -$g_i$, alors _u_ = 0. Dans ce cas et dans ce cas seulement, $G_i$ est sur un cycle. Remarquons un cas trivial : $G_i$ est sur un cycle dès lors que _p_ est congru à 5 (mod 8) et que le symbole de Legendre de $g_i$ par rapport à _p_ vaut +1. Rappelons que $G_i$ = 4 est impossible dans ce cas.
    - Si _r_ ne vaut ni $g_i$ ni -$g_i$, alors _u_ > 0 ; notons que la clé $\langle (p-1)/2^t, p \rangle$ transforme tout résidu non quadratique y en un élément _b_ qui est une racine $2^t$ ième primitive de l'unité. L'algorithme suivant calcule _u_ à partir de _r_ et _b_ en utilisant deux variables entières : w initialisée par _r_ et _jj_ prenant des valeurs de 2 à $2^{t-2}$.

Pour _i_ allant de 1 à _t_-2, répéter la séquence suivante :

- Calculer $w^2/G_i$ (mod $p_j$), puis, élever le résultat à la puissance $2^{t-i-1}$ (mod $p_j$) : on doit obtenir +1 ou -1. Lorsque l'on obtient -1, calculer $jj = 2^i$, puis, remplacer w par $w.b^{jj}$ (mod $p_j$). Lorsque l'on obtient +1, ne rien faire. A l'issue du calcul, la variable w a pour valeur $g_i$ ou -$g_i$. De plus, nous savons que le rang de $G_i$ dans CG($p_j$) est divisible par $2^t/jj$ mais pas par $2^{t+1}/jj$, c'est-à-dire que _jj_ détermine la valeur de _u_ par $jj = 2^{t-u}$. Lorsque _v_ est plus grand que _jj,_

c'est-à-dire, *k > t-u,* rejeter le candidat pour passer à un autre. Lorsque *v* est plus petit ou égal à *jj*, c'est-à-dire, $k \leq$ *t-u,* poursuivre l'évaluation du candidat.

Lorsque les *f* facteurs premiers ont été produits, le module public *n* est le produit des *f* facteurs premiers $p_1$, $p_2$, ... $p_f$. L'entier non signé *n* peut se représenter par une séquence binaire ; cette séquence respecte les contraintes imposées au début du programme pour la taille en bits et pour le nombre de bits successifs à 1 en poids forts. Le choix des facteurs premiers assure les propriétés suivantes du module *n* par rapport à chacun des *m* nombres de base $g_1$, $g_2$, ... $g_m$. D'une part, les équations (1) et (2) n'ont pas de solution en *x* dans l'anneau des entiers modulo *n.* D'autre part, l'équation (3) a des solutions en x dans l'anneau des entiers modulo *n*.

**En résumé, les facteurs premiers congrus à 1 (mod 4) sont choisis indépendamment les uns des autres.** Alors que les facteurs congrus à 3 (mod 4) prennent en compte progressivement les nombres de base, chaque facteur premier congru à 1 (mod 4) doit prendre en compte l'ensemble des contraintes imposées par chacun des nombres de base. Chaque facteur premier congru à 1 (mod 4), *soit p,* de $p_{f-e}$ à $p_f$, doit avoir passé avec succès l'examen suivant en deux étapes.

**1) L'étape (1) s'exécute successivement pour chacun des *m* nombres de base de $g_1$ à $g_m$.**

On calcule le symbole de Legendre du nombre de base courant g par rapport au candidat *p.* Un et un seul des deux cas suivants se présente : Si le symbole vaut -1, on rejette le candidat. Sinon (le symbole vaut +1), on poursuit l'examen en passant au nombre de base g suivant à l'étape (1).

Lorsque le candidat est acceptable pour l'ensemble des *m* nombres de base, on passe à l'étape (2).

**2) L'étape (2) s'exécute successivement pour chacune des *m* valeurs publiques de $G_1$ à $G_m$.**

On calcule un entier *t* tel que *p*-1 est divisible par $2^t$ mais pas par $2^{t+1}$, puis, un entier $s = (p-1+2^t)/2^t+1$, de façon à établir une clé $\langle s, p \rangle$. On applique la clé $\langle s, p \rangle$ à la valeur publique courante $G = g^2$ pour obtenir un résultat *r,* soit: $r \equiv G^s \pmod{p}$. Selon le résultat, un et un seul des deux cas suivants se présente :

a) Si *r* est égal à g ou à -g, alors *u* = 0 ; on poursuit l'examen du candidat en passant à la valeur publique *G* suivante à l'étape (2).

b) Sinon, on calcule un nombre *u* positif, prenant une des valeurs de 1 à *t-2*, en appliquant l'algorithme suivant qui met en oeuvre deux variables : *jj* prenant des valeurs allant de 2 à $2^{t-2}$ et *w* initialisée par *r,* ainsi qu'un nombre entier *b* obtenu en appliquant une clé $\langle (p-1)/2^t, p \rangle$ à un résidu non quadratique de CG(*p*).

Pour un indice *ii* allant de 1 à *t-2,* on répète l'opération suivante :

On calcule $w^2/G \pmod{p}$, puis, on applique une clé $\langle 2^{t-ii-1}, p \rangle$ au résultat pour obtenir +1 ou -1 (sinon, on a une preuve que le candidat n'est pas premier). Si l'on obtient -1, alors on calcule $jj = 2^{ii}$, puis, $c \equiv b^{jj} \pmod{p}$, puis, on remplace *w* par *w.c* $\pmod{p}$, puis, on passe à l'indice *ii* suivant. Si l'on obtient +1, on passe à l'indice *ii* suivant.

A l'issue de l'algorithme, la valeur figurant dans la variable *jj* définit *u* par la relation $jj = 2^{t-u}$ ; la valeur figurant dans la variable *w* est une racine carrée de *G,* c'est-à-dire, *g* ou -*g* (sinon, on a une preuve que le candidat n'est pas premier). Deux cas se présentent :

- Si *t-u < k,* alors on rejette le candidat *p* parce que la branche où figure *G* n'est pas assez longue.
- Sinon (*t-u $\geq$ k*), on poursuit l'évaluation du candidat en passant à la valeur publique *G* suivante à l'étape (2).

Lorsque le candidat est acceptable pour l'ensemble des *m* valeurs publiques, il est accepté comme facteur premier congru à 1 (mod 4).

**Calcul des valeurs associées**

Pour obtenir les composantes privées, calculons toutes les solutions à l'équation (3.a) dans les deux cas les plus simples et les plus courants avant d'aborder le cas général.

**Pour chaque facteur premier $p_j$ congru à 3 (mod 4),** la clé $\langle (p_j+1)/4, p_j \rangle$ donne la racine carrée quadratique de n'importe quel résidu quadratique. On en déduit une manière de calculer une solution à l'équation (3.a) :

$$s_j \equiv ((p_j+1) / 4)^k \pmod{(p_j-1)/2} ;$$

puis,

$$Q_{i,j} \equiv G_i^{sj} \pmod{p_j}$$

ou bien plutôt, l'inverse (mod $p_j$) d'une telle solution.

$$s_j \equiv (p_j-1)/2 - ((p_j+1)/4)^k \pmod{(p_j-1)/2} ;$$

puis,

$$Q_{i,j} \equiv G_i^{sj} \pmod{p_j}$$

Dans $CG(p_j)$, il y a alors deux et seulement deux racines carrées de l'unité : +1 et -1 ; il y a donc deux solutions en $x$ à l'équation (3.a) : les deux nombres $Q_{i,j}$ et $p_j$-$Q_{i,j}$ ont le même carré $G_i$ (mod $p_j$).

**Pour chaque facteur premier $p_j$ congru à 5 (mod 8),** la clé $\langle (p_j+3)/8, p_j \rangle$ donne la racine carrée de rang impair de n'importe quel élément de rang impair. On en déduit une solution à l'équation (3.a) :

$$s_j \equiv ((p_j+3)/8)^k \pmod{(p_j-1)/4} ;$$

puis,

$$Q_{i,j} \equiv G_i^{sj} \pmod{p_j}$$

ou bien plutôt, l'inverse (mod $p_j$) d'une telle solution.

$s_j \equiv (p_j-1)/4 - ((p_j+3)/8)^k \pmod{(p_j-1)/4}$ ; puis, $Q_{i,j} \equiv G_i^{sj}$ (mod $p_j$) Dans $CG(p_j)$, il y a alors quatre et seulement quatre racines quatrièmes de l'unité ; il y a donc quatre solutions en $x$ à l'équation (3.a). Remarquons que $2^{(pj-1)/4}$ (mod $p_j$) est une racine carrée de -1 parce que le symbole de Legendre de 2 par rapport à $p$ congru à 5 (mod 8) vaut -1. Si $Q_{i,j}$ est une solution, alors $p_j$-$Q_{i,j}$ est une autre solution, ainsi que le produit (mod $p_j$) de $Q_{i,j}$ par une racine carrée de -1.

**Pour un facteur premier $p_j$ congru à $2^t+1$ (mod $2^{t+1}$),** la clé $\langle (p_j-1+2^t)/2^{t+1}, p_j \rangle$ donne la racine carrée de rang impair de n'importe quel élément de rang impair. On peut donc calculer une solution à l'équation (3.a).

- Calculons d'abord un nombre entier $s_j \equiv ((p_j-1+2^t)/2^{t+1})^k \pmod{(p_j-1)/2^t}$ pour établir une clé $\langle s_j, pj \rangle$.
- Lorsque la clé $\langle (p_j-1+2^t)/2^{t+1}, p_j \rangle$ transforme $G_i$ en $g_i$ ou en $-g_i$, le rang de $G_i$ est impair dans $CG(p_j)$ ($u = 0$). Alors, la clé $\langle s_j, p_j \rangle$ transforme $G_i$ en un nombre $z$ : c'est la solution de rang impair à l'équation (3.a). Selon les valeurs de $t$ et de $k$, il y a encore min($2^k$-1, $2^t$-1) autres solutions sur une ou plusieurs branches. La branche de $z^2$ porte une autre solution : c'est $p_j$-$z$. Lorsque $t \geq 2$, la branche de $z^4$ porte deux autres solutions : c'est le produit de $z$ par chacune des deux racines carrées de -1, c'est-à-dire, chacune des deux racines quatrièmes primitives de l'unité. Or, si $y$ est un résidu non quadratique de $CG(p_j)$, alors, $y^{(pj-1)/4}$ (mod $p_j$) est une racine carrée de -1. D'une manière générale, pour $i$ prenant chaque valeur de 1 à min($k$, $t$), la branche de la puissance $2^i$ ième de $z$ porte $2^{i-1}$ solutions : ce sont les produits (mod $p_j$) de $z$ par chacune des $2^{i-1}$ racines $2^i$ ièmes primitives de l'unité. Or, si $y$ est un résidu non quadratique de $CG(p_j)$, alors, $y$ à la puissance $(p_j-1)/2^i$ est une racine $2^i$ ième primitive de l'unité que nous nommons c. Les $2^{i-1}$ racines $2^i$ ièmes primitives de l'unité sont les puissances impaires de $c$ : $c$, $c^3$ (mod $p_j$), $c^5$ (mod $p_j$), ... $c$ à la puissance $2^i$-1 (mod $p_j$).
- Lorsque la clé $\langle (p_j-1+2^t)/2^{t+1}, p_j \rangle$ transforme $G_i$ en un nombre entier $r$ qui n'est ni $g_i$ ni -$g_i$, le rang de $G_i$ est pair dans $CG(p_j)$ ($u > 0$). Alors, à condition que $G_i$ soit convenablement placé sur une branche assez longue, c'est-à-dire, $t \geq k + u$, il y a un $2^k$ solutions sur la branche où figure $G_i$. Pour calculer une racine $2^k$ ième, il suffit de réitérer $k$ fois de rang l'algorithme de calcul de racine carrée donné ci-dessus, de façon à calculer les racines carrées des résultats successifs jusqu'à une solution $z$. Ce calcul peut bien sûr être optimisé pour approcher directement une racine $2^k$ ième et ajuster ensuite une seule fois l'approximation d'une racine $2^k$ ième pour atteindre une solution $z$. Pour obtenir toutes les autres solutions, remarquons tout d'abord que si $y$ est un résidu non quadratique de $CG(p_j)$, alors, $y$ à la puissance $(p_j-1)/2^k$ est une racine $2^k$ ième primitive de l'unité que nous nommons d. Les $2^k$ racines $2^k$ ièmes de l'unité sont les puissances successives de $d$ : $d$, $d^2$ (mod $p_j$), $d^3$ (mod $p_j$), ... $d$ à la puissance $2^k$-1 (mod $p_j$), $d$ à la puissance $2^k$ (mod $p_j$) qui vaut 1. Les $2^k$ solutions sur la branche où figure $G_i$ sont les produits (mod $p_j$) de z par

chacune de ces racines.

**En résumé, pour calculer une composante pour le facteur premier *p* et le nombre de base *g*, connaissant *k*, *t* et *u*, on procède comme suit :**

1) On calcule un nombre entier : $s \equiv ((p\text{-}1+2^t)/2^{t+1})^k$ (mod $(p\text{-}1)/2^t$) pour établir une clé $\langle s, p \rangle$. Puis, on applique la clé $\langle s, p \rangle$ à $G$ pour obtenir $z \equiv G^s$ (mod *p*). Selon la valeur de *u*, on passe à l'étape (2) ou (3).

2) Si $u = 0$, $z$ est la solution de rang impair à l'équation (3.a). Il y a encore min($2^k$-1, $2^t$-1) autres solutions de rang pair sur une ou plusieurs branches, très exactement sur min($k, t$) autres branches. Pour *i* allant de 1 à min($k, t$), la branche de la puissance $2^i$ ième de $z$ porte $2^{i\text{-}1}$ solutions : ce sont les produits (mod *p*) de $z$ par chacune des $2^{i\text{-}1}$ racines $2^i$ ièmes primitives de l'unité. La solution générique à l'équation (3.a) est représentée par *zz*. On passe à l'étape (4).

3) Si $u > 0$, toutes les solutions à l'équation (3.a) sont de rang pair. Il y en a $2^k$ et elles figurent toutes sur la branche où figure $G$ ; en effet : $t\text{-}u \geq k$. Pour calculer une solution, l'algorithme suivant met en oeuvre deux variables : *jj* prenant des valeurs allant de 2 à $2^{t\text{-}2}$ et *w* initialisée par *z,* ainsi qu'un nombre entier *b* obtenu en appliquant une clé $\langle (p\text{-}1)/2^t, p \rangle$ à un résidu non quadratique de CG(*p*).
On répète *k* fois de rang la séquence suivante :
Pour un indice *ii* allant de 1 à *t-2*, on répète l'opération suivante : On calcule $w^2/G$ (mod *p*), puis, on applique une clé $\langle 2^{t\text{-}ii\text{-}1}, p \rangle$ au résultat pour obtenir +1 ou -1 (sinon, on a une preuve que *p* n'est pas premier). Si l'on obtient -1, alors on calcule $jj = 2^{ii}$, puis, $c \equiv b^{jj}$ (mod *p*), puis, on remplace *w* par *w.c* (mod *p*), puis, on passe à l'indice *ii* suivant. Si l'on obtient +1, on passe à l'indice *ii* suivant.
A l'issue de l'algorithme, la variable *w* a pour valeur *za*. Les $2^k$ solutions sur la branche où figure $G$ sont les produits (mod *p*) de *za* par chacune des $2^k$ racines $2^k$ ièmes de l'unité. La solution générique à l'équation (3.a) est représentée par *zz*. On passe à l'étape (4).

4) Connaissant *zz,* on en déduit une valeur de composante : c'est l'inverse de *zz* modulo *p* lorsque l'équation $G.Q^v \equiv 1$ (mod *n*) est utilisée et *zz* lorsque l'équation $G \equiv Q^v$ (mod *n*) est utilisée.

**Remarque.** Il y a diverses méthodes pour obtenir les composantes privées et les valeurs privées. Connaissant une collection de *f* composantes, c'est-à-dire, les *f* composante pour un nombre de base donné, la technique des restes chinois permet de calculer la valeur privée correspondante. On voit ainsi que, pour une valeur publique $G$ et un module *n* donnés, il peut y avoir plusieurs valeurs privées $Q$ possibles. Il y en a quatre lorsque *n* est le produit de deux facteurs premiers congrus à 3 (mod 4) ; il y en a huit avec trois facteurs premiers congrus à 3 (mod 4) ; il y en a seize avec deux facteurs premiers congrus à 3 (mod 4) et un congru à 5 (mod 8). Un usage judicieux de ces multiples valeurs peut compliquer les attaques par analyse de la consommation électrique d'une carte à puce utilisant GQ2.

Ainsi, au fur et à mesure que *t* augmente, le programme se complique pour des cas de plus en plus rares. En effet, les nombres premiers se répartissent en moyenne comme suit : $t = 1$ pour un sur deux, $t = 2$ pour un sur quatre, $t = 3$ pour un sur huit, et ainsi de suite. De plus, les contraintes dues aux *m* nombres de base rendent les candidatures de moins en moins acceptables. Quoi qu'il en soit, les modules mixtes font définitivement partie de la technologie GQ2 ; le type du module GQ2 n'affecte en rien les protocoles d'authentification dynamique et de signature numérique.

La figure 3 illustre $G_i = g_i^2$ sur un cycle avec un facteur premier *p* congru à 9 (mod 16), c'est-à-dire, $t = 3$, $u = 0$, ainsi que $k \geq 3$. On peut noter que :

$$b \equiv y^{\frac{p-1}{8}} \pmod{p}$$

$$b^8 \equiv 1 \pmod{p}$$

$$b^4 \equiv -1 \pmod{p}$$

La figure 4 illustre $G_i = g_i^2$ sur une branche avec un facteur premier *p* congru à 65 (mod 128), c'est-à-dire, $t = 6$, ainsi que $k = 4$ et $u = 2$.

Voici un premier jeu de clés GQ2 avec **$k = 6$,** soit v = 64, **$m = 3$,** soit trois nombres de base : $g_1 = 3$, $g_2 = 5$ et $g_3 = 7$, et **$f = 3$,** soit un module à trois facteurs premiers : deux congrus à 3 (mod 4) et un à 5 (mod 8). Notons que

$g$ = 2 est incompatible avec un facteur premier congru à 5 (mod 8).

$p_1$ = 03CD2F4F21E0EAD60266D5CFCEBB6954683493E2E833

$(2 \mid p_1)$ = -1 ; $(3 \mid p_1)$ = +1 ; $(5 \mid p_1)$ = -1 ; $(7 \mid p_1)$ = +1

$p_2$ = 0583B097E8D8D777BAB3874F2E76659BB614F985EC1B

$(2 \mid p_1)$ = -1 ; $(3 \mid p_1)$ = -1 ; $(5 \mid p_1)$ = +1 ; $(7 \mid p_1)$ = -1

$p_3$ = 0C363CD93D6B3FEC78EE13D7BE9D84354B8FDD6DA1FD

$(2 \mid p_1)$ = -1 ; $(3 \mid p_1)$ = +1 ; $(5 \mid p_1)$ = +1 ; $(7 \mid p_1)$ = +1

$n = p_1 . p_2 . p_3$ = FFFF81CEA149DCF2F72EB449C5724742FE2A3630D902CC00EAFEE1B957F3BDC49BE9CBD4 D94467B72AF28CFBB26144 CDF4BBDBA3C97578E29CC9BBEE8FB6DDDD

$Q_{1,1}$ = 0279C60D216696CD6F7526E23512DAE090CFF879FDDE

$Q_{2,1}$ = 7C977FC38F8413A284E9CE4EDEF4AEF35BF7793B89

$Q_{3,1}$ = 6FB3B9C05A03D7CADA9A3425571EF5ECC54D7A7B6F

$Q_{1,2}$ = 0388EC6AA1E87613D832E2B80E5AE8C1DF2E74BFF502

$Q_{2,2}$ = 04792CE70284D16E9A158C688A7B3FEAF9C40056469E

$Q_{3,2}$ = FDC4A8E53E185A4BA793E93BEE5C636DA731BDCA4E

$Q_{1,3}$ = 07BC1AB048A2EAFDAB59BD40CCF2F657AD8A6B573BDE

$Q_{2,3}$ = 0AE8551E116A3AC089566DFDB3AE003CF174FC4E4877

$Q_{3,3}$ = 01682D490041913A4EA5B80D16B685E4A6DD88070501

$Q_1$ = D7E1CAF28192CED6549FF457708D50A7481572DD5F2C335D8C69E22521B510B64454FB7A19AEC8D0698 5558E764C6991B05FC2A C74D9743435AB4D7CF0FF6557

$Q_2$ = CB1ED6B1DD649B89B9638DC33876C98AC7AF689E9D1359E4DB17563B9B3DC582D5271949F3DBA5A70 C108F561A274405A5CB8 82288273ADE67353A5BC316C093

$Q_3$ = 09AA6F4930E51A70CCDFA77442B10770DD1CD77490E3398AAD9DC50249C34312915E55917A1ED4D83A A3D607E3EB5C8B197 697238537FE7A0195C5E8373EB74D

Voici d'autres valeurs possibles pour les composantes liées au facteur $p_3$ lequel est congru à 5 (mod 8).

Voici une racine carrée de -1 dans CG($p_3$) : c = $2^{(p3-1)/4}$ (mod $p_3$) = 0C3000933A854E4 CB309213F12CAD59FA7AD775AAC37

$Q'_{1,3}$ = $c$ . $Q_{1,3}$ (mod $p_3$) = 050616671372B87DEC9AEEAC68A3948E9562F714D76C

$Q'_{2,3}$ = $c$ . $Q_{2,3}$ (mod $p_3$) = 06F308B529C9CE88D037D01002E7C838439DACC9F8AA

$Q'_{3,3}$ = $c$ . $Q_{3,3}$ (mod $p_3$) =
015BE9F4B92F1950A69766069F788E45439497463D58

Ce qui donne :

$Q'_1$ = 676DF1BA369FF306F4A1001602BCE5A008DB82882E87C148D0D820A711121961C9376CB45C355945 C5F2A9E5AFAAD7861886284A 9B319F9E4665211252D74580

$Q'_2$ = CAEC4F41752A228CF9B23B16B3921E47C059B9E0C68634C2C64D6003156F30EF1BC02ADA25581 C8FDE76AAI4AB5CC60A2DE1C 565560B27E8AA0E6F4BCA7FE966

$Q'_3$ = 2ACDF5161FE53B68CC7C18B6AFE495815B46599F44C51A6A1A4E858B470E8E5C7D2200EF135239 AF0B7230388A6A5BDD8EE15B 0D094FC2BFA890BFDA669D9735

Voici un second jeu de clés GQ2, avec **k = 9**, soit $v$ = 512, **m = 2**, soit deux nombres de base : $g_1$ = 2 et $g_2$ = 3, et **f = 3**, soit un module à trois facteurs premiers congrus à 3 (mod 4).

$p_1$ = 03852103E40CD4F06FA7BAA9CC8D5BCE96E3984570CB

$(2 \mid p_1)$ = -1 ; $(3 \mid p_1)$ = -1 ; et on trouve bien, $(6 \mid p_1)$ = +1.

$p_2$ = 062AC9EC42AA3E688DC2BC871C8315CB939089B61DD7

$(2 \mid p_2)$ = +1 ; $(3 \mid p_2)$ = -1 ; et on trouve bien, $(6 \mid p_2)$ = -1.

$p_3$ = 0BCADEC219F1DFBB8AB5FE808A0FFCB53458284ED8E3

$(2 \mid p_3)$ = -1 ; $(3 \mid p_3)$ = +1 ; et on trouve bien, $(6 \mid p_3)$ = -1.

$n = p_1 . p_2 . p_3$ = FFFF5401ECD9E537F167A80C0A9111986F7A8EBA4D 6698AD68FF670DE5D9D77DFF00716 DC7539F7CBBCF969E73A0C49 761B276A8E6B6977A21D51669D039F1D7

$Q_{1,1}$ = 0260BC7243C22450D566B5C6EF74AA29F2B927AF68E1

$Q_{2,1}$ = 0326C12FC7991ECDC9BB8D7C1C4501BE1BAE9485300E

$Q_{1,2}$ = 02D0B4CC95A2DD435D0E22BFBB29C59418306F6CD00A

$Q_{2,2}$ = 045ECB881387582E7C556887784D2671CA118E22FCF2

$Q_{1,3}$ = B0C2B1F808D24F6376E3A534EB555EF54E6AEF5982

$Q_{2,3}$ = 0AB9F81DF462F58A52D937E6D81F48FFA4A87A9935AB

$Q_1$ = 27F7B9FC82C19ACAE47F3FE9560C3536A7E90F8C3C51E13C35F32FD8C6823DF753685DD63555D2146 FCDB9B28DA367327DD6 EDDA092D0CF108D0AB708405DA46

$Q_2$ = 230D0B9595E5AD388F1F447A69918905EBFB05910582E5BA649C94B0B2661E49DF3C9B42FEF1F37A7909 B1C2DD54113ACF87C6 F11F19874DE7DC5D1DF2A9252D

Dans la présente demande, on a décrit un procédé pour produire des jeux de clés GQ2, à savoir, des modules $n$ et des couples de valeurs publique $G$ et privée $Q$ dans le cas où l'exposant v est égal à $2^k$. Ces jeux de clés sont utilisés pour mettre en oeuvre un procédé destiné à prouver l'authenticité d'une entité et/ou l'intégrité et/ou l'authenticité d'un message ainsi que cela a été décrit.

**Revendications**

1. Procédé mis en oeuvre par des moyens micro-électroniques permettant de produire les **f** facteurs premiers $\mathbf{p_1}$, $\mathbf{p_2, ...p_f}$ d'un protocole destiné à prouver à une entité contrôleur,

   - l'authenticité d'une entité et/ou
   - l'intégrité d'un message **M** associé à cette entité,
   au moyen d'un module public **n** constitué par le produit desdits **f** facteurs premiers $\mathbf{p_1, p_2, ... p_f}$, **f** étant supérieur ou égal à 2, ou au moyen des **f** facteurs premiers ;
   ledit procédé comprenant l'étape de produire lesdits **f** facteurs premiers $\mathbf{p_1, p_2, ... p_f}$, en respectant les conditions suivantes :

   • aucune des deux équations 1 et 2 :

   $$x^2 \equiv g_i \bmod n \quad \text{et} \quad x^2 \equiv - g_i \bmod n$$

   n'a de solution en x dans l'anneau des entiers modulo n,
   • l'équation 3:

   $$x^v \equiv g_i^2 \bmod n$$

   a des solutions en x dans l'anneau des entiers modulo n ;
   $\mathbf{g_1, g_2, ... g_m}$ désignant **m** nombres de base entiers, distincts, **m** étant supérieur ou égal à 1 ;
   v désignant un exposant public de la forme :
   $v=2^k$
   où **k** est un paramètre de sécurité plus grand que 1 ;
   ledit procédé comprenant l'étape de choisir en premier :

   • le paramètre de sécurité **k**
   • les m nombres de base $\mathbf{g_1, g_2, ... g_m}$,
   • la taille du module **n**,
   • la taille des **f** facteurs premiers $\mathbf{p_1, p_2, ... p_f}$.

2. Procédé selon la revendication 1 tel que les **m** nombres de base $\mathbf{g_1, g_2, ... g_m}$, sont choisis au moins en partie parmi les premiers nombres entiers.

3. Procédé selon l'une quelconque des revendications 1 ou 2, tel que le paramètre de sécurité k est un petit nombre entier, notamment inférieur à 100.

4. Procédé selon l'une quelconque des revendications 1 à 3, tel que la taille du module n est supérieure à plusieurs centaines de bits.

5. Procédé selon l'une quelconque des revendications 1 à 4, tel que les f facteurs premiers $\mathbf{p_1, p_2, ... p_f}$ ont une taille voisine de la taille du module **n** divisé par le nombre **f** de facteurs.

6. Procédé selon l'une quelconque des revendications 1 à 5, tel que parmi les f facteurs premiers $\mathbf{p_1, p_2, ... p_f}$

   - on choisit un nombre e de facteurs premiers congrus à 1 modulo 4, **e** pouvant être nul; dans le cas où e est nul le module **n** sera ci-après qualifié de module basique, dans le cas où **e > 0** le module **n** sera ci-après qualifié de module mixte,
- les **f-e** autres facteurs premiers sont choisis congrus à 3 modulo 4, **f-e** étant au moins égal à 2.

**7.** Procédé selon la revendication 6 tel que pour produire les **f-e** facteurs premiers $p_1$, $p_2$, ... $p_{f-6}$, congrus à 3 modulo 4, on met en oeuvre les étapes suivantes :

- on choisit le premier facteur premier $p_1$ congru à 3. modulo 4,
- on choisit le deuxième facteur premier $p_2$ tel que $p_2$ soit complémentaire de $p_1$ par rapport au nombre de base $g_1$,
- on choisit le facteur $p_{i+1}$ en procédant comme suit en distinguant deux cas :

1) Cas où i> m

• on choisit le facteur $p_{i+1}$ congru à 3 modulo 4,

2) Cas où i≤m

• on calcule le profil **Profil$_i$(g$_i$)** de **gi** par rapport aux i premiers facteurs premiers $p_j$,

• si le **Profil$_i$(g$_i$)** est plat, on choisit le facteur $p_{i+1}$ tel que $p_{i+1}$ soit complémentaire de $p_1$ par rapport à $g_i$,
• sinon, on choisit parmi les **i-1** nombres de bases $g_1$, $g_2$, ... $g_{i-1}$ et toutes leurs combinaisons multiplicatives le nombre, ci-après dénommé **g,** tel que **Profil$_i$(g) = Profil$_i$(g$_i$),** on choisit ensuite $p_{i+1}$ tel que **Profil$_{i+1}$(g$_j$)** ≠ **Profil$_{i+1}$(g),**

les expressions "complémentaire", "profil", "profil plat" ayant le sens défini dans la description.

**8.** Procédé selon la revendication 7 tel que pour choisir le dernier facteur premier $p_{f-e}$ on procède comme suit, en distinguant trois cas :

1) Cas où f-e-1 > m

• on choisit $p_{f-e}$ congru à 3 modulo 4,

2) Cas où f-e-1 = m

• on calcule **Profil$_{f-e-1}$(g$_m$)** par rapport aux f-e-1 premiers facteurs premiers, de $p_1$ à $p_{f-e-1}$,

• • si **Profil$_{f-e-1}$(g$_m$)** est plat, on choisit $p_{f-e-1}$ tel qu'il soit complémentaire de $p_1$ par rapport à $g_m$,
• • sinon,

• • • on choisit parmi les **m-1** nombres de bases de $g_1$ à $g_{m-1}$ et toutes leurs combinaisons multiplicatives le nombre, ci-après dénommé g, tel que **Profil$_i$(g) = Profil$_i$(g$_i$),** puis
• • • on choisit ensuite $p_{f-e}$ tel que **Profil$_{f-e}$(g)** ≠ **Profil$_{f-e}$(g$_m$),**

3) Cas où f-e-1 <m

• on choisit $p_{f-e}$ tel que les deux conditions suivantes soient satisfaites :

3.1) Première condition,

• on calcule **Profil$_{f-e-1}$(g$_{f-e-1}$)** par rapport aux f-e-1 premiers facteurs premiers, de $p_1$ à $p_{f-e-1}$,

• • si **Profil$_{f-e-1}$(g$_{f-e-1}$)** est plat, on choisit $p_{f-e}$ tel qu'il satisfasse à la première condition d'être complémentaire de $p_1$ par rapport à $g_{f-e-1}$,
• • sinon,

• • • on choisit parmi les **f-e-1** nombres de bases de $g_1$ à $g_{m-1}$ et toutes leurs combinaisons multiplicatives le nombre, ci-après dénommé **g,** tel que **Profil$_i$(g) = Profil$_{f-e-1}$(g$_{f-e-1}$),** puis
• • • on choisit ensuite **p$_{f-e}$** tel qu'il satisfasse à la première condition d'être tel que **Profil$_{f-e}$(g) $\neq$ Profil$_{f-e}$(g$_m$),**

3.2) Deuxième condition,

• on sélectionne parmi l'ensemble des derniers nombres de bases de $g_{f-e}$ à $g_m$ ceux dont le profil **Profil$_{f-e-1}$(g$_i$)** est plat, puis
• on choisit **p$_{f-e}$** tel qu'il satisfasse à la deuxième condition d'être complémentaire de **p$_1$** par rapport à chacun des nombres de bases ainsi sélectionnés.

**9.** Procédé selon les revendications 7 ou 8 tel que pour produire les e facteurs premiers congrus à 1 modulo 4, on évalue chaque candidat facteur premier **p**, de **p$_{f-e}$** à **p$_f$**, en lui faisant subir les deux tests successifs suivants

1) Premier test

- on calcule le symbole de Legendre de chaque nombre de base **g$_i$**, de **g$_1$** à **g$_m$**, par rapport au facteur premier **p** candidat,

• si le symbole de Legendre est égal à -1, on rejette le candidat **p,**
• si le symbole de Legendre est égal à +1, on poursuit l'évaluation du candidat p en passant au nombre de base suivant, puis lorsque le dernier nombre de base a été pris en compte on passe au deuxième test,

2) Deuxième test,

- on calcule un nombre entier **t** tel que p-1 est divisible par $2^t$ mais pas par $2^{t+1}$, puis
- on calcule un entier s tel que **s = (p-1+2$^t$)/2$^{t+1}$**,
- on applique la clé $\langle$**s, p**$\rangle$ à chaque valeur publique **G$_i$** pour obtenir un résultat **r**

$$r \equiv G_i^{\,s} \bmod p$$

• si **r** est égal à **g$_i$** ou - **g$_i$**, on poursuit le deuxième test en passant à la valeur publique **G$_{i+1}$** suivante,
• si **r** est différent de **g$_i$** ou - **g$_i$**, on calcule un facteur **u** en appliquant l'algorithme suivant :

• • l'algorithme consiste à répéter la séquence suivante pour un indice ii allant de 1 à t-2 :
• • l'algorithme met en oeuvre deux variables : **w** initialisée par **r** et **jj** = **2$^{ii}$** prenant des valeurs allant de 2 à $2^{t-2}$ , ainsi qu'un nombre **b** obtenu par l'application de la clé $\langle$**(p-1)/2$^t$,p**$\rangle$ à un résidu non quadratique de CG(p), puis, on itère les étapes 1 et 2 suivantes,

• • • étape 1 : on calcule $w^2$/G$_i$ mod p,
• • • étape 2 : on élève le résultat à la puissance $2^{t-ii-l}$

• • • • si on obtient +1, on poursuit le deuxième test en passant à la valeur publique **G$_{i+1}$** suivante,
• • • • si on obtient -1, on calcule jj = $2^{ii}$, puis on remplace w par w.b$^{jj}$ (mod p), puis on poursuit l'algorithme pour la valeur suivante de l'indice ii,

• • à l'issue de l'algorithme, la valeur figurant dans la variable jj permet de calculer un nombre entier u par la relation jj= $2^{t-u}$, puis on calcule l'expression t-u, deux cas se présentent :

• • • si t-u < k, on rejette le candidat **p**
• • • si t-u $\geq$ k, on continue l'évaluation du candidat **p** en poursuivant le deuxième test en passant à la valeur publique **G$_{i+1}$** suivante, le candidat **p** est accepté comme facteur premier congru à 1 modulo 4 si à l'issue du deuxième test, pour toutes les **m** valeurs publiques G$_i$, il n'a pas été rejeté.

**10.** Protocole faisant application du procédé selon l'une quelconque des revendications 1 à 9 ; ledit protocole étant destiné à prouver à une entité contrôleur,

- l'authenticité d'une entité et/ou
- l'intégrité d'un message **M** associé à cette entité,

au moyen de **m** couples de valeurs privées $Q_1$, $Q_2$, ... $Q_m$ et publiques $G_1$, $G_2$, ... $G_m$, ou des paramètres dérivés de ceux-ci ;
ledit module et lesdites valeurs étant liés par des relations du type :

$$G_i \cdot Q_i^{v} \equiv 1 \cdot \text{mod } n \text{ ou } G_i \equiv Q_i^{v} \text{mod } n \; ;$$

ladite valeur publique $G_i$ étant le carré $g_i^2$ du nombre de base $g_i$ inférieur aux f facteurs premiers $p_1$, $p_2$, ... $p_f$;
ledit protocole mettant en oeuvre selon les étapes suivantes une entité appelée témoin disposant des f facteurs premiers $p_i$ et/ou des paramètres des restes chinois des facteurs premiers et/ou du module public **n** et/ou des **m** valeurs privées $Q_i$ et/ou des **f.m** composantes $Q_{i,j}$ telles que $Q_{i,j}$ $Q_i$ mod $p_j$ des valeurs privées $Q_i$ et de l'exposant public v ;

- le témoin calcule des engagements **R** dans l'anneau des entiers modulo **n** ; chaque engagement étant calculé :

• soit en effectuant des opérations du type

$$R \equiv r^{v} \text{mod } n$$

où r est un aléa tel que 0 **< r < n,**
• soit

•• en effectuant des opérations du type

$$R_i \equiv r_i^{v} \text{mod } p_i$$

où $r_i$ est un aléa associé au nombre premier $p_i$ tel que $0 < r_i < p_i$, chaque $r_i$ appartenant à une collection d'aléas $\{r_1, r_2, ... r_f\}$,
•• puis en appliquant la méthode des restes chinois ;

- le témoin reçoit un ou plusieurs défis **d** ; chaque défi **d** comportant **m** entiers $d_i$ ci-après appelés défis élémentaires ; le témoin calcule à partir de chaque défi **d** une réponse **D,**

• soit en effectuant des opérations du type :

$$D \equiv r \cdot Q_1^{d1} \cdot Q_2^{d2} \cdot ... \cdot Q_m^{dm} \text{mod } n$$

• soit

•• en effectuant des opérations du type :

$$D_i \equiv r_i \cdot Q_{i,1}^{d1} \cdot Q_{i,2}^{d2} \cdot ... \cdot Q_{i,m}^{dm} \text{mod } p_i$$

•• puis en appliquant la méthode des restes chinois ;
ledit procédé étant tel qu'il y a autant de réponses D que de défis **d** que d'engagements **R**, chaque groupe de nombres **R, d, D** constituant un triplet noté {R, d, D};
tel que pour mettre en oeuvre les couples de valeurs privées $Q_1$, $Q_2$, ... $Q_m$ et publiques $G_1$, $G_2$, ... $G_m$, on utilise les facteurs premiers $p_1$, $p_2$, ... $p_f$ et/ou les paramètres des restes chinois, les nombres

de bases $g_1$, $g_2$, ...$2g_m$ et/ou les valeurs publiques $G_1$, $G$, ... $G_m$ pour calculer :

- soit les valeurs privées $Q_1$, $Q_2$, ... $Q_m$ en extrayant une **k ième** racine carrée modulo **n** de $G_i$, ou en prenant l'inverse d'une **k ième** racine carrée modulo **n** de $G_i$,
- soit les **f.m** composantes privées $Q_{i,j}$ des valeurs privées $Q_1$, $Q_2$, ... $Q_m$, telles que $Q_{i,j} \equiv Q_i \bmod p_j$, tel que pour calculer les **f.m** composantes privées $Q_{i,j}$ des valeurs privées $Q_1$, $Q_2$, ... $Q_m$:
- on applique la clé $\langle$**s, $p_j$**$\rangle$ pour calculer z tel que

$$z \equiv G_i^s \ \mathbb{Z} \ \blacksquare \ \bmod p_j$$

- on utilise les valeurs t et u

   • calculées comme indiqué ci-dessus dans le cas où $p_j$ est congru à 1 modulo 4 et
   • prises respectivement égales à 1 et 0 dans le cas où $p_j$ est congru à 3 modulo 4,

      • • si u est nul on considère l'ensemble des nombres zz tels que :

         • • • zz soit égale à z ou tel que
         • • • zz soit égale au produit mod $p_j$ de z par chacune des $2^{ii-t}$ racines $2^{ii}$ ièmes primitives de l'unité, ii allant de 1 à min(k,t),

      • • si u est positif on considère l'ensemble des nombres zz tels que zz soit égale au produit mod $p_j$ de za par chacune des $2^k$ racines $2^k$ ièmes de l'unité, za désignant la valeur de la variable w à l'issue de l'algorithme mis en oeuvre dans la revendication 10,

- on en déduit au moins une valeur de la composante $Q_{i, j}$ elle est égale à zz lorsque l'équation $G_i \equiv Q_i^v$ **mod n** est utilisée ou bien elle est égale à l'inverse de zz modulo $p_j$ de zz lorsque l'équation $G_i . Q_i^v \equiv$ **1. mod n** est utilisée.

## Patentansprüche

1. Verfahren, das durch mikroelektronische Mittel ausgeführt wird, die es ermöglichen, die f Primfaktoren $p_1$, $p_2$, ... $p_f$ eines Protokolls zu erzeugen, das einer Steuereinheitsentität Folgendes beweisen soll:

   - die Authentizität einer Entität und/oder
   - die Integrität einer Nachricht M, die dieser Entität zugeordnet ist,
   mittels eines öffentlichen Moduls n, der durch das Produkt der f Primfaktoren $p_1$, $p_2$, ... $p_f$ gebildet ist, wobei f größer als oder gleich 2 ist, oder mittels der f Primfaktoren;
   wobei das Verfahren den Schritt der Erzeugung der f Primfaktoren $p_1$, $p_2$, ... $p_f$ unter Einhalten der folgenden Bedingungen umfasst:

      • keine der zwei Gleichungen 1 und 2:

$$x^2 \equiv g_i \bmod n$$

      und

$$x^2 \equiv - g_i \bmod n$$

      hat eine Lösung für x im Ring der ganzen Zahlen modulo n,
      • Gleichung 3:

$$x^v \equiv g_i^2 \bmod n$$

hat Lösungen für x im Ring der ganzen Zahlen modulo n;
wobei $g_1$, $g_2$, ... $g_m$ m unterschiedliche ganze Basiszahlen bezeichnen, wobei m größer als oder gleich 1 ist;
v einen öffentlichen Exponenten der folgenden Form bezeichnet:
$v = 2^k$
wobei k ein Sicherheitsparameter ist, der größer ist als 1;
wobei das Verfahren den Schritt umfasst, zuerst Folgendes zu wählen:

- den Sicherheitsparameter k
- die m Basiszahlen $g_1$, $g_2$, ... $g_m$
- die Größe des Moduls n
- die Größe der f Primfaktoren $p_1$, $p_2$, ... $p_f$.

2. Verfahren nach Anspruch 1, so dass die m Basiszahlen $g_1$, $g_2$, ... $g_m$ zumindest teilweise aus den ersten ganzen Zahlen gewählt werden.

3. Verfahren nach einem der Ansprüche 1 oder 2, so dass der Sicherheitsparameter k eine kleine ganze Zahl ist, die insbesondere geringer ist als 100.

4. Verfahren nach einem der Ansprüche 1 bis 3, so dass die Größe des Moduls n größer ist als mehrere hundert Bits.

5. Verfahren nach einem der Ansprüche 1 bis 4, so dass die f Primfaktoren $p_1$, $p_2$, ... $p_f$ eine Größe nahe der Größe des Moduls n dividiert durch die Anzahl f von Faktoren aufweisen.

6. Verfahren nach einem der Ansprüche 1 bis 5, so dass unter den f Primfaktoren $p_1$, $p_2$, ... $p_f$

- eine Anzahl e von Primfaktoren, die zu 1 modulo 4 kongruent sind, gewählt wird, wobei e null sein kann; in dem Fall, in dem e null ist, der Modul n nachfolgend als Basismodul qualifiziert wird, in dem Fall, in dem e > 0, der Modul n nachfolgend als gemischter Modul qualifiziert wird,
- die f-e anderen Primfaktoren kongruent zu 3 modulo 4 gewählt werden, wobei f-e mindestens gleich 2 ist.

7. Verfahren nach Anspruch 6, so dass zum Erzeugen der f-e Primfaktoren $p_1$, $p_2$, ... $p_{f-e}$, die zu 3 modulo 4 kongruent sind,
die folgenden Schritte ausgeführt werden:

- der erste Primfaktor $p_1$, der zu 3 modulo 4 kongruent ist, wird gewählt,
- der zweite Primfaktor $p_2$ wird so gewählt, dass $p_2$ zu $p_1$ in Bezug auf die Basiszahl $g_1$ komplementär ist,
- der Faktor $p_{i+1}$ wird durch Vorgehen wie folgt durch Unterscheiden von zwei Fällen gewählt:

1) Fall, in dem i>m

- der Faktor $p_{i+1}$, der zu 3 modulo 4 kongruent ist, wird gewählt,

2) Fall, in dem i≤m

- das Profil $\text{Profil}_i(g_i)$ von gi in Bezug auf die i ersten Primfaktoren $p_i$ wird berechnet,

- falls das $\text{Profil}_i(g_i)$ flach ist, wird der Faktor $p_{i+1}$ so gewählt, dass $p_{i+1}$ zu $p_1$ in Bezug auf $g_i$ komplementär ist,
- ansonsten wird aus den i-1 Basiszahlen $g_1$, $g_2$, ... $g_{i-1}$ und allen ihren multiplikativen Kombinationen die Zahl, die nachstehend g genannt wird, so gewählt, dass $\text{Profil}_i(g)=\text{Profil}_i(g_i)$, anschließend wird $p_{i+1}$ so gewählt, dass $\text{Profil}_{i+1}(g_i) \neq \text{Profil}_{i+1}(g)$,

wobei die Ausdrücke "komplementär", "Profil", "flaches Profil" die in der Beschreibung definierte Bedeutung haben.

8. Verfahren nach Anspruch 7, so dass zum Wählen des letzten Primfaktors $p_{f-e}$ wie folgt vorgegangen wird, indem drei Fälle unterschieden werden:

1) Fall, in dem f-e-1>m

- $p_{f-e}$, das zu 3 modulo 4 kongruent ist, wird gewählt,

2) Fall, in dem f-e-1=m

- $\text{Profil}_{f-e-1}(g_m)$ in Bezug auf die f-e-1 ersten Primfaktoren von $p_1$ bis $p_{f-e-1}$ wird berechnet,

  - • falls $\text{Profil}_{f-e-1}(g_m)$ flach ist, wird $p_{f-e-1}$ so gewählt, dass es zu $p_1$ in Bezug auf $g_m$ komplementär ist,
  - • ansonsten

    - •• wird aus den m-1 Basiszahlen von $g_1$ bis $g_{m-1}$ und allen ihren multiplikativen Kombinationen die Zahl, die nachstehend g genannt wird, gewählt, so dass $\text{Profil}_i(g)=\text{Profil}_i(g_i)$, dann
    - •• wird anschließend $p_{f-e}$ derart gewählt, dass $\text{Profil}_{f-e}(g)\neq\text{Profil}_{f-e}(g_m)$

3) Fall, in dem f-e-1<m

- $p_{f-e}$ wird derart gewählt, dass die zwei folgenden Bedingungen erfüllt sind:

  3.1) Erste Bedingung

  - $\text{Profil}_{f-e-i}(g_{f-e-1})$ in Bezug auf die f-e-1 ersten Primfaktoren von $p_1$ bis $p_{f-e-1}$ wird berechnet,

    - • falls $\text{Profil}_{f-e-1}(g_{f-e-1})$ flach ist, wird $p_{f-e}$ derart gewählt, dass es die erste Bedingung erfüllt, dass es zu $p_1$ in Bezug auf $g_{f-e-1}$ komplementär ist,
    - • ansonsten

      - •• wird unter den f-e-1-Basiszahlen von $g_1$ bis $g_{m-1}$ und allen ihren multiplikativen Kombinationen die Zahl, die nachstehend g genannt wird, gewählt, so dass $\text{Profil}_i(g)=\text{Profil}_{f-e-1}(g_{f-e-1})$, dann
      - •• wird anschließend $p_{f-e}$ derart gewählt, dass es die erste Bedingung erfüllt, dass es derart ist, dass $\text{Profil}_{f-e}(g)\neq\text{Profil}_{f-e}(g_m)$,

  3.2) Zweite Bedingung

  - aus der Gesamtheit der letzten Basiszahlen von $g_{f-e}$ bis $g_m$ werden jene ausgewählt, deren Profil $\text{Profil}_{f-e-1}(g_i)$ flach ist, dann
  - wird $p_{f-e}$ derart gewählt, dass es die zweite Bedingung erfüllt, dass es zu $p_1$ in Bezug auf jede der so ausgewählten Basiszahlen komplementär ist.

**9.** Verfahren nach den Ansprüchen 7 oder 8, so dass zum Erzeugen der e Primfaktoren, die zu 1modulo 4 kongruent sind, jeder Kandidatenprimfaktor p von $p_{f-e}$ bis $p_f$ bewertet wird, indem er den folgenden zwei aufeinanderfolgenden Tests unterzogen wird

1) Erster Test

- das Legendre-Symbol jeder Basiszahl $g_i$ von $g_1$ bis $g_m$ in Bezug auf den Kandidatenprimfaktor p wird berechnet,

  - falls das Legendre-Symbol gleich -1 ist, wird der Kandidat p verworfen,
  - falls das Legendre-Symbol gleich +1 ist, wird die Bewertung des Kandidaten p durch Übergehen zur folgenden Basiszahl fortgesetzt, wenn die letzte Basiszahl berücksichtigt wurde, wird dann zum zweiten Test übergegangen,

2) Zweiter Test

- eine ganze Zahl t wird so berechnet, dass p-1 durch $2^t$, aber nicht durch $2^{t+1}$ dividierbar ist, dann
- wird eine ganze Zahl s so berechnet, dass $s=(p-1+2^t)/2^{t+1}$,
- der Schlüssel (s,p) wird auf jeden öffentlichen Wert $G_i$ angewendet, um ein Ergebnis r zu erhalten

$$r \equiv G_i{}^s \bmod p$$

• falls r gleich $g_i$ oder $-g_i$ ist, wird der zweite Test durch Übergehen zum folgenden öffentlichen Wert $G_{i+1}$ fortgesetzt,
• falls r von $g_i$ oder $-g_i$ verschieden ist, wird ein Faktor u durch Anwenden des folgenden Algorithmus berechnet:

•• der Algorithmus besteht darin, die folgende Sequenz für einen Index ii zu wiederholen, der von 1 bis t-2 geht:
•• der Algorithmus setzt zwei Variablen ein: w, das durch r und $jj = 2^{ii}$ initialisiert wird, das Werte annimmt, die von 2 bis $2^{t-2}$ gehen, sowie eine Zahl b, die durch die Anwendung des Schlüssels $\langle(p-1)/2^t,p\rangle$ auf einen nicht quadratischen Rest von CG(p) erhalten wird, dann werden die folgenden Schritte 1 und 2 iteriert,

••• Schritt 1: $w^2/G_i \bmod p$ wird berechnet,
••• Schritt 2: das Ergebnis wird in die Potenz $2^{t-ii-1}$ erhoben,

•••• falls +1 erhalten wird, wird der zweite Test durch Übergehen zum folgenden öffentlichen Wert $G_{i+1}$ fortgesetzt,
•••• falls -1 erhalten wird, wird $jj = 2^{ii}$ berechnet, dann wird w durch $w.b^{ii}(\bmod p)$ ersetzt, dann wird der Algorithmus für den folgenden Wert des Index ii fortgesetzt,

•• am Ende des Algorithmus ermöglicht es der Wert, der in der Variable jj erscheint, eine ganze Zahl u durch die Beziehung $jj = 2^{t-u}$ zu berechnen, dann wird der Ausdruck t-u berechnet, wobei zwei Fälle erscheinen:

••• falls t-u < k, wird der Kandidat p verworfen
••• falls t-u $\geq$ k, wird die Bewertung des Kandidaten p durch Fortsetzen des zweiten Tests durch Übergehen zum folgenden öffentlichen Wert $G_{i+1}$ fortgesetzt,

der Kandidat p wird als Primfaktor, der zu 1 modulo 4 kongruent ist, angenommen, falls am Ende des zweiten Tests für alle m öffentlichen Werte $G_i$ er nicht verworfen wurde.

10. Protokoll, das das Verfahren nach einem der Ansprüche 1 bis 9 anwendet; wobei das Protokoll einer Steuereinheitsentität Folgendes beweisen soll

- die Authentizität einer Entität und/oder
- die Integrität einer Nachricht M, die dieser Entität zugeordnet ist,
mittels m Paaren von privaten Werten $Q_1$, $Q_2$, ... $Q_m$ und öffentlichen Werten $G_1$, $G_2$, ... $G_m$, oder Parametern, die von diesen abgeleitet sind;
wobei der Modul und die Werte durch Beziehungen des folgenden Typs verknüpft sind:

$$G_i \cdot Q_i{}^v \equiv 1.\bmod n$$

oder

$$G_i \equiv Q_i{}^v \bmod n;$$

wobei der öffentliche Wert $G_i$ das Quadrat $g_i{}^2$ der Basiszahl $g_i$ ist, die geringer ist als die f Primfaktoren $p_1$, $p_2$, ... $p_f$, wobei das Protokoll gemäß den folgenden Schritten eine Entität einsetzt, die Kontrolle genannt wird, die über die f Primfaktoren $p_i$ und/oder die Parameter der chinesischen Reste der Primfaktoren und/oder den öffentlichen Modul n und/oder die m privaten Werte $Q_i$ und/oder die f.m Komponenten $Q_{i,j}$, wie $Q_{i,j} \equiv Q_i \bmod p_j$ der privaten Werte $Q_i$ und des öffentlichen Exponenten v verfügt;

- die Kontrolle berechnet Verpflichtungen R im Ring der ganzen Zahlen modulo n; wobei jede Verpflichtung berechnet wird:

  • entweder durch Durchführen der Operationen des Typs

$$R \equiv r^v \bmod n$$

wobei r ein Risiko ist, so dass $0<r<n$,
  • oder

  • • durch Durchführen der Operationen des Typs

$$R_i \equiv r_i{}^v \bmod p_i$$

wobei $r_i$ ein Risiko ist, das der Primzahl $p_i$ zugeordnet ist, so dass $0 < r_i < p_i$, wobei jedes $r_i$ zu einer Sammlung von Risiken $\{r_1, r_2, ... r_f\}$ gehört,
  • • dann durch Anwenden der Methode der chinesischen Reste;

- die Kontrolle empfängt eine oder mehrere Herausforderungen d; wobei jede Herausforderung d m ganze Zahlen $d_i$ umfasst, die nachstehend elementare Herausforderungen genannt werden; die Kontrolle berechnet anhand jeder Herausforderung d eine Antwort D,

  • entweder durch Durchführen der Operationen des Typs:

$$D \equiv r.Q_1{}^{d1}.Q_2{}^{d2}. \ ...Q_m{}^{dm} \bmod n$$

  • oder

  • • durch Durchführen der Operationen des Typs:

$$D_i \equiv r_i.Q_{i,1}{}^{d1}.Q_{i,2}{}^{d2}. \ ... \ Q_{i,m}{}^{dm} \bmod p_i$$

  • • dann durch Anwenden der Methode der chinesischen Reste;

    wobei das Verfahren derart ist, dass es so viele Antworten D wie Herausforderungen d wie Verpflichtungen R gibt, wobei jede Gruppe von Zahlen R, d, D ein Triplett bildet, das als {R, d, D} bezeichnet wird;
    so dass zum Einsetzen der Paare von privaten Werten $Q_1$, $Q_2$, ... $Q_m$ und öffentlichen Werten $G_1$, $G_2$, ..., $G_m$ die Primfaktoren $p_1$, $p_2$, ... $p_f$ und/oder die Parameter der chinesischen Reste, die Basiszahlen $g_1$, $g_2$, ... $^2g_m$ und/oder die öffentlichen Werte $G_1$, G , ... $G_m$ verwendet werden, um Folgendes zu berechnen:

- entweder die privaten Werte $Q_1$, $Q_2$, ... $Q_m$ durch Extrahieren einer k-ten Quadratwurzel modulo n von $G_i$ oder durch Nehmen des Kehrwerts einer k-ten Quadratwurzel modulo n von $G_i$,
- oder die f.m privaten Komponenten $Q_{i,j}$ der privaten Werte $Q_1$, $Q_2$, ... $Q_m$, wie $Q_{i,j} = Q_i \bmod p_j$,
so dass zum Berechnen der f.m privaten Komponenten $Q_{i,j}$ der privaten Werte $Q_1$, $Q_2$, ... $Q_m$:
- der Schlüssel $\langle s, p_j \rangle$ angewendet wird, um z so zu berechnen, dass

$$z \equiv G_j{}^s \bmod p_j$$

- die Werte t und u verwendet werden,

• die berechnet werden, wie vorstehend angegeben, in dem Fall, in dem $p_j$ zu 1 modulo 4 kongruent ist, und
• jeweils gleich 1 und 0 genommen werden in dem Fall, in dem $p_j$ zu 3 modulo 4 kongruent ist,

•• falls u null ist, wird die Gesamtheit der Zahlen zz betrachtet, so dass

••• zz gleich z ist oder dass
••• zz gleich dem Produkt mod $p_j$ von z mit jeder der $2^{ii}$-ten Stammfunktionen der $2^{ii-t}$ Wurzeln der Einheit ist, wobei ii von 1 bis min(k,t) geht,

•• falls u positiv ist, wird die Gesamtheit der Zahlen zz betrachtet, so dass zz gleich dem Produkt mod $p_j$ von za mit jeder der $2^k$ $2^k$-ten Wurzeln der Einheit ist, wobei za den Wert der Variable w am Ende des Algorithmus bezeichnet, der in Anspruch 10 ausgeführt wird,

- mindestens ein Wert der Komponente $Q_{i,j}$ wird davon abgezogen, er ist gleich zz, wenn die Gleichung $G_i = Q_i^v$ mod n verwendet wird, bzw. er ist gleich dem Kehrwert von zz modulo $p_j$ von zz, wenn die Gleichung $G_i.Q_i^v$ = 1.mod n verwendet wird.

**Claims**

1. Method, implement by microelectronic means, allowing the **f** prime factors **p₁, p₂,...pf** of a protocol intended to prove, to a controller entity,

   - the authenticity of an entity and/or
   - the integrity of a message **M** associated with this entity,
   to be produced by means of a public modulus **n** that is the product of said **f** prime factors **p₁, p₂,...pf, f** being higher than or equal to 2, or by means of the **f** prime factors;
   said method comprising the step of producing said **f** prime factors **p₁, p₂,...pf** while respecting the following conditions:

   • neither of the two equations 1 and 2:

$$x^2 \equiv g_i \bmod n \text{ and } x^2 \equiv -g_i \bmod n$$

   has a solution in x in the ring of integers modulo **n,** and
   • the equation 3:

   • $x^v \equiv g_i^2 \bmod n$
   has solutions in x in the ring of integers modulo **n;**
   **g₁, g₂, ...gm** being **m** different integer base numbers, **m** being higher than or equal to 1;
   **v** being a public exponent of the form:
   **v = 2ᵏ**
   where **k** is a security parameter higher than 1; said method comprising the step of first choosing:

   • the security parameter **k,**
   • the **m** base numbers **g₁, g₂,...gm,**
   • the size of the modulus **n,**
   • and the size of the **f** prime factors **p₁, p₂,...pf.**

2. Method according to Claim 1, such that the **m** base numbers **g₁, g₂,...gm** are at least partly chosen from the prime integer numbers.

3. Method according to either one of Claims 1 and 2, such that the security number **k** is a small integer number, in particular smaller than 100.

4. Method according to any one of Claims 1 to 3, such that the size of the modulus **n** is larger than several hundred bits.

5. Method according to any one of Claims 1 to 4, such that the **f** prime factors $p_1$, $p_2$,...$p_f$ are of a size similar to the size of the modulus **n** divided by the number **f** of factors.

6. Method according to any one of Claims 1 to 5, such that among the **f** prime factors $p_1$, $p_2$,...$p_f$

   • a number **e** of prime factors that is congruent to 1 modulo 4 is chosen, **e** possibly being zero; in the case where **e** is zero the modulus **n** will be called basic modulus and in the case where **e > 0** the modulus **n** will be called mixed modulus,
   • the **f-e** other prime factors are chosen congruent to 3 modulo 4, **f-e** being at least equal to 2.

7. Method according to Claim 6, such that, to produce the **f-e** prime factors $p_1$, $p_2$,...$p_{f-e}$ congruent to 3 modulo 4, the following steps are implemented:

   • the first prime factor $p_1$ is chosen to be congruent to 3 modulo 4,
   • the second prime factor $p_2$ is chosen such that $p_2$ is complementary to $p_1$ with respect to the base number $g_1$,
   • the factor $p_{i+1}$ is chosen by proceeding as follows, two cases being considered:

   1) Case where i>m

   • the factor $p_{i+1}$ is chosen to be congruent to 3 modulo 4,

   2) Case where i≤m

   • the profile **Profil$_i$($g_i$)** of $g_i$ with respect to the i first prime factors $p_i$ is calculated,
   • if **Profil$_i$($g_i$)** is flat, the factor $p_{i+1}$ is chosen such that $p_{i+1}$ is complementary to $p_1$ with respect to $g_i$,
   • otherwise, a number, denoted **g** below, is chosen, from the **i-1** base numbers $g_1$, $g_2$,...$g_{i-1}$ and all their multiplicative combinations, such that **Profil$_i$(g)=Profil$_i$($g_i$)**, $p_{i+1}$ then being chosen such that **Profil$_{i+1}$($g_i$)≠Profil$_{i+1}$(g)**,

   the expressions "complementary", "profile" and "flat profile" having the meaning defined in the description.

8. Method according to Claim 7, such that the process used to choose the last prime factor $p_{f-e}$ is as follows, three cases being considered:

   1) Case where f-e-1 > m

   • $p_{f-e}$ is chosen to be congruent to 3 modulo 4,

   2) Case where f-e-1 = m

   • **Profil$_{f-e-1}$($g_m$)** is calculated with respect to the f-e-1 first prime factors, from $p_1$ to $p_{f-e-1}$,

   • • if **Profil$_{f-e-1}$($g_m$)** is flat, $p_{f-e-1}$ is chosen so as to be complementary to $p_1$ with respect to $g_m$,
   • • otherwise,

   • •• the number, denoted **g** below, is chosen, from the **m-1** base numbers from $g_1$ to $g_{m-1}$ and all their multiplicative combinations, such that **Profil$_i$(g)=Profil$_i$($g_i$)**, then
   • •• $p_{f-e}$ is chosen such that **Profil$_{f-e}$(g)** ≠ **=Profil$_{f-e}$($g_m$)**,

   3) Case where f-e-1 < m

   • $p_{f-e}$ is chosen such that the two following conditions are met:

   3.1) First condition,

   • **Profil$_{f-e-1}$($g_{f-e-1}$)** is calculated with respect to the f-e-1 first prime factors, from $p_1$ to $p_{f-e-1}$,

   • • if **Profil$_{f-e-1}$($g_{f-e-1}$)** is flat, $p_{f-e}$ is chosen such that it meets the first condition of being com-

plementary to $p_1$ with respect to $g_{f-e-1}$,

• • otherwise,

• •• the number, denoted **g** below, is chosen, from the **f-e-1** base numbers from $g_1$ to $g_{m-1}$ and all their multiplicative combinations, such that $Profil_i(g)=Profil_{f-e-1}(g_{f-e-1})$, then
• •• $p_{f-e}$ is then chosen such that it meets the first condition of being such that $Profil_{f-e}(g) \neq Profil_{f-e}(g_m)$,

3.2) Second condition,

• from the set of the last base numbers from $g_{f-e}$ to $g_m$, those the profile $Profil_{f-e-1}(g_i)$ of which is flat are selected, then
• $p_{f-e}$ is then chosen such that it meets the second condition of being complementary to $p_1$ with respect to each of the base numbers thus selected.

**9.** Method according to either of claims 7 and 8, such that to produce the **e** prime factors congruent to 1 modulo 4, each prime-factor candidate **p**, from $p_{f-e}$ to $p_f$, is evaluated by subjecting it to the two following successive tests

1) First test

- the Legendre symbol of each base number $g_i$, from $g_1$ to $g_m$, is calculated with respect to the prime-factor candidate **p**,

• if the Legendre symbol is equal to -1, the candidate **p** is rejected,
• if the Legendre symbol is equal to +1, the evaluation of the candidate **p** continues with the following base number, then, after the last base number has been tested, the second test is passed to,

2) Second test,

- an integer number **t** is calculated such that p-1 is divisible by $2^t$ but not by $2^{t-1}$, then
- an integer **s** such that $s = (p-1+2^t)/2^{t+1}$ is calculated,
- the key **<s, p>** to each public value $G_i$ is applied to obtain a result **r**

$$r \equiv G_i{}^s \bmod p$$

• if **r** is equal to $g_i$ or $-g_i$, the second test continues with the following public value $G_{i+1}$,
• if **r** is different from $g_i$ or $-g_i$, a factor **u** is calculated by applying the following algorithm:

• • the algorithm consists in repeating the following sequence for an index **ii** ranging from 1 to t-2:
• • the algorithm implements two variables: **w,** which is initialised to **r**, and $jj = 2^{ii}$, which takes values ranging from 2 to $2^{t-2}$; but also a number **b** obtained by applying the key **<(p-1)/2^t,p>** to a non-quadratic residue of CG(p), the following steps 1 and 2 then being iterated,

• •• step 1: $w^2/G_i \bmod p$ is calculated,
• •• step 2: the result is raised to the power of $2^{t-ii-1}$

• ••• if +1 is obtained, the second test continues with the following public value $G_{i+1}$,
• ••• if -1 is obtained, $jj = 2^{ii}$ is calculated, then w is replaced by $w.b^{jj} \pmod p$, the algorithm then continuing with the following value of the index ii,

• • at the end of the algorithm, the value of the variable jj allows an integer number u to be calculated via the relationship $jj = 2^{t-u}$, then the expression t-u is calculated, two cases being considered:

• •• if t-u < k, the candidate **p** is rejected
• •• if t-u ≥ k, the evaluation of the candidate **p** continues, the second test continuing with the following public value $G_{i+1}$;
the candidate **p** is accepted to be a prime factor congruent to 1 modulo 4 if, at the end of the second test, for all the **m** public values **G$_i$**, it has not been rejected.

10. Protocol applying the method according to any one of Claims 1 to 9, said protocol being intended to prove, to a controller entity,

- the authenticity of an entity and/or
- the integrity of a message **M** associated with this entity,

by means of **m** pairs of private values **Q$_1$, Q$_2$,...Q$_m$** and public values **G$_1$, G$_2$,...G$_m$**, or parameters derived from said pairs,
said modulus and said values being related by relationships of the type:

$$G_i \cdot Q_i{}^v \equiv 1 \cdot \bmod\ n \text{ or } G_i \equiv Q_i{}^v \bmod\ n,$$

said public value **G$_i$** being the square **g$_i$$^2$** of the base number **g$_i$** lower than the **f** prime factors **p$_1$, p$_2$,...p$_f$**; said protocol employs, in the following steps, an entity called a witness, which has access to the **f** prime factors **p$_i$** and/or to Chinese remainder parameters of the prime factors and/or of the public modulus **n** and/or of the **m** private values **Q$_i$** and/or to the **f.m** components **Q$_{i,j}$**, such that $Q_{i,j} \equiv$ **Q$_i$ mod** $p_j$) of the private values **Q$_i$** and to the public exponent **v;**
- the witness calculates commitments **R** in the ring of integers modulo **n**; each commitment being calculated:

• either by performing operations of the type

$$R \equiv r^v \bmod\ n$$

where **r** is a random such that **0 < r < n,**
• or

•• by performing operations of the type

$$R_i \equiv r_i{}^v \bmod\ p_i$$

where **r$_i$** is a random associated with the prime number **p$_i$** such that **0 < r$_i$ < p$_i$**, each **r$_i$** belonging to a collection of randoms **{r$_1$, r$_2$,...r$_f$},**
•• then by applying the Chinese remainder method;

- the witness receives one or more challenges **d;** each challenge **d** including **m** integers **d$_i$** that are referred to as elementary challenges below; the witness calculates, from each challenge **d**, a response **D,**

• either by performing operations of the type

$$D \equiv r \cdot Q_1{}^{d1} \cdot Q_2{}^{d2} \cdot ...Q_m{}^{dm} \bmod\ n$$

• or

•• by performing operations of the type:

$$D_i \equiv r_i \cdot Q_{i,1}{}^{d1} \cdot Q_{i,2}{}^{d2} \cdot ...Q_{i,m}{}^{dm} \bmod\ p_i$$

•• then by applying the Chinese remainder method,
said method being such that there are as many responses **D** as challenges **d** as commitments **R**, each group of numbers **R, d, D** forming a triplet denoted **{R,d,D};**
such that, to implement the pairs of private values **Q$_1$, Q$_2$,...Q$_m$** and public values **G$_1$, G$_2$,...G$_m$**, the prime factors **p$_1$, p$_2$,...p$_f$** and/or the Chinese remainder parameters, the base numbers **g$_1$, g$_2$,...$^2$g$_m$**

and/or the public values $G_1, G, ...G_m$, are used to calculate:

- either the private values $Q_1, Q_2,...Q_m$ by extracting a **k th** square root modulo **n** from $G_i$, or by taking the inverse of a **k th** square root modulo **n** of $G_i$;
- or the **f.m** private components $Q_{i,j}$ of the private values $Q_1, Q_2,...Q_m$ such that $Q_{i,j} \equiv Q_i \mod p_j$;

such that, to calculate the **f.m** private components $Qi,j$ of the private values $Q_1, Q_2,...Q_m$:

- the key **<s,p$_j$>** is applied to calculate **z** such that

$$\mathbf{z} \equiv \mathbf{G_i}^{\mathbf{s}} \bmod p_j$$

- the values **t** and **u** are used

   • these values being calculated as indicated above in the case where $\mathbf{p_j}$ is congruent to 1 modulo 4 and
   • respectively set equal to 1 and 0 in the case where $\mathbf{p_j}$ is congruent to 3 modulo 4,

     •• if **u** is zero, the set of the numbers zz is considered, these numbers being such that:

      •••• zz is equal to z or such that
      •••• zz is equal to the product mod $p_j$ of z multiplied by each of the $2^{ii-t}$ $2^{ii}$th primitive roots of unity, ii ranging from 1 to min(k,t),

     •• if **u** is positive, the set of the numbers zz is considered, these numbers being such that zz is equal to the product mod $p_j$ of za multiplied by each of the $2^k$ $2^k$th roots of unity, za designating the value of the variable w at the end of the algorithm implemented in claim 10,

- at least one value of the component $\mathbf{Q_{i,j}}$ is deduced; it is equal to zz when the equation $\mathbf{G_i} \equiv \mathbf{Q_i}^{\mathbf{v}} \bmod \mathbf{n}$ is used or else it is equal to the inverse of zz modulo $p_j$ of zz when the equation $\mathbf{G_i \cdot Q_i}^{\mathbf{v}} \equiv \mathbf{1.\bmod n}$ is used.

**EP 1 145 473 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0311470 B1